(19) Europäisches Patentamt
European Patent Office
Office européen des brevets

(11) EP 3 679 612 B1

(12) # EUROPEAN PATENT SPECIFICATION

(45) Date of publication and mention of the grant of the patent:
**25.10.2023 Bulletin 2023/43**

(21) Application number: **18853089.3**

(22) Date of filing: **07.09.2018**

(51) International Patent Classification (IPC):
***H01M 10/06*** *(2006.01)* ***H01M 50/446*** *(2021.01)*
*H01M 50/463* *(2021.01)*

(52) Cooperative Patent Classification (CPC):
**H01M 10/06; H01M 50/446;** H01M 2220/20; Y02E 60/10

(86) International application number:
**PCT/US2018/049847**

(87) International publication number:
**WO 2019/051159 (14.03.2019 Gazette 2019/11)**

(54) **IMPROVED LEAD ACID BATTERY SEPARATORS INCORPORATING CARBON**

VERBESSERTE BLEISÄUREBATTERIESEPARATOREN MIT KOHLENSTOFF

SÉPARATEURS POUR BATTERIES AU PLOMB-ACIDE PERFECTIONNÉS CONTENANT DU CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2017 US 201762555690 P**

(43) Date of publication of application:
**15.07.2020 Bulletin 2020/29**

(73) Proprietor: **Daramic, LLC**
**Charlotte, NC 28277 (US)**

(72) Inventors:
- **STAINER, Matthew**
  **Owensboro**
  **KY 42303 (US)**
- **APPIKATLA, Susmitha**
  **Owensboro**
  **KY 42303 (US)**
- **GOLOVIN, Neal, M.**
  **Owensboro**
  **KY 42303 (US)**
- **WHEAR, Kevin, J.**
  **Utica**
  **KY 42376 (US)**
- **MANICKAM, Kurma**
  **Karnataka Bangalore 560086 (IN)**

(74) Representative: **Tomkins & Co**
**5 Dartmouth Road**
**Dublin 6 (IE)**

(56) References cited:
**EP-A1- 2 858 142**
**WO-A1-2017/062781**
**JP-A- 2017 135 110**
**RU-C1- 2 562 258**
**US-A1- 2012 070 747**
**US-A1- 2013 273 409**
**US-A1- 2015 318 529**
**US-A1- 2017 098 810**
**US-A1- 2017 104 199**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 679 612 B1

## Description

### Field

In accordance with at least select embodiments, the present disclosure or invention is directed to novel or improved separators for lead acid batteries, such as flooded lead acid batteries, and in particular enhanced flooded lead acid batteries ("EFBs"), and various other lead acid batteries, such as gel and absorptive glass mat ("AGM") batteries. In accordance with at least select embodiments, the present disclosure or invention is directed to novel or improved separators, battery separators, battery separators incorporating carbon, battery separators incorporating conductive carbon, EFB separators, membranes, scrims, mats, batteries, cells, systems, methods involving the same, vehicles using the same, methods of manufacturing the same, the use of the same, and combinations thereof. In addition, disclosed herein are methods, systems, and battery separators for: enhancing battery life; reducing battery failure; reducing water loss; improving oxidation stability; improving, maintaining and/or lowering float current; improving end of charge ("EOC") current; decreasing the current and/or voltage needed to charge and/or fully charge a deep cycle battery; minimizing internal electrical resistance; lowering electrical resistance; increasing wettability; lowering wet out time with electrolyte; reducing time of battery formation; reducing antimony poisoning; reducing acid stratification; improving acid diffusion and/or improving uniformity in lead acid batteries; and combinations thereof. In accordance with at least particular embodiments, the present disclosure or invention is directed to an improved separator for lead acid batteries wherein the separator includes rubber, latex, and/or improved performance-enhancing additives and/or coatings. In accordance with at least certain embodiments, the disclosed separators are useful for deep-cycling applications, such as in motive machines such as golf carts (sometimes referred to as golf cars); inverters; and renewable energy systems and/or alternative energy systems, such as solar power systems and wind power systems. The disclosed separators are also useful in battery systems wherein deep cycling and/or partial state of charge operations are part of the battery applications. In certain other embodiments, the disclosed separator may be used in battery systems where additives and/or alloys (antimony being a key example) are added to the battery to enhance the life and/or performance of the battery and/or to enhance the deep cycling and/or partial state of charge operating capability of the battery. In accordance with at least select embodiments, the present disclosure or invention may address current issues or needs, and/or may provide an improved separator and/or battery which overcomes the current issues or problems, for instance by providing batteries mitigating the formation of dendrites, having improved charge acceptance, and/or having improved cycling performance.

### Background

A battery separator is used to separate the battery's positive and negative electrodes or plates in order to prevent an electrical short. Such a battery separator is typically porous so that ions may pass therethrough between the positive and negative electrodes or plates. In lead acid storage batteries, such as automotive batteries and/or industrial batteries and/or deep cycle batteries, the battery separator is typically a porous polyethylene separator; in some cases, such a separator may include a backweb and a plurality of ribs standing on one or both sides of the backweb. See: Besenhard, J. O., Editor, Handbook of Battery Materials, Wiley-VCH Verlag GmbH, Weinheim, Germany (1999), Chapter 9, pp. 245-292. Some separators for automotive batteries are made in continuous lengths and rolled, subsequently folded, and sealed along the edges to form pouches or envelopes that receive the electrodes for the batteries. Certain separators for industrial (or traction or deep cycle storage) batteries are cut to a size about the same as an electrode plate (pieces or leaves).

The electrodes in a lead acid battery are often made up of a lead alloy having a relatively high antimony content. Batteries operating at a partial state of charge ("PSOC") tend to lend themselves to acid stratification. In this condition, more acid is concentrated within the electrolyte at the bottom of the battery, and more water is concentrated in the electrolyte at the top of the battery. Lead becomes soluble in water and goes into solution. However, the lead precipitates in acid and forms a solid crystal. Therefore, acid stratification tends to lead to lead sulfate ($PbSO_4$) crystal formation that form dendrites. Even without acid stratification, acid may be depleted during discharge and allow lead to go into solution, and then precipitate into crystals as acid is restored during a charge cycle.

When these crystals build up to a large enough size, the dendrites can tear or burn a hole through the separator and form a conductive bridge to connect the negative electrode to the positive electrode, thus leading to a short. This can hamper voltage discharge, charge acceptance, or even lead to a catastrophic failure and render the battery non-functional. All of which compromise the performance and life of the battery.

US Patent Publication no. 2017/0104199 discloses battery separators for use in flooded lead-acid batteries, and in particular enhanced flooded lead-acid batteries. The separators disclosed therein provide for enhanced electrolyte mixing and substantially reduced acid stratification. PCT Patent Publication No. WO2017/062781 also discloses battery separators for use in flooded lead-acid batteries, and in particular enhanced flooded lead-acid batteries. US Patent Publication no. 2017/098810 discloses separators and/or batteries have improved charge acceptance, improved surface

conductivity, improved oxidation resistance, reduced acid stratification, improved resistance to metal contamination induced oxidation, reduced black residue, improved wettability, and/or improved stiffness. US Patent Publication no. 2012/07074 addresses multiple separator properties simultaneously, including a separator having negative cross ribs. EP Patent Publication no. 2858142 discloses a separator positioned between electrodes to electrically insulate the electrodes and a battery which includes a nonwoven fiber mat positioned adjacent an electrode.

For at least certain applications or batteries, there remains a need for improved separators providing for improved cycle life, reduced acid stratification, and/or reduced dendrite formation. More particularly, there remains a need for improved separators, and improved batteries (such as those operating at a partial state of charge) comprising an improved separator, which provides for enhancing battery life, reducing battery failure, improving oxidation stability, improving, maintaining, and/or lowering float current, improving end of charge ("EOC") current, decreasing the current and/or voltage needed to charge and/or fully charge a deep cycle battery, minimizing internal electrical resistance increases, lowering electrical resistance, reducing antimony poisoning, reducing acid stratification, improving acid diffusion, and/or improving uniformity in lead acid batteries.

## Summary

The present invention is set out in the claims. The details of one or more embodiments are set forth in the descriptions below. Other features, objects, and advantages will be apparent from the description and from the claims. In accordance with at least select embodiments, the present disclosure or invention may address the above issues or needs. In accordance with at least certain objects, aspects, or embodiments, the present disclosure or invention may provide an improved separator and/or battery which overcomes the aforementioned problems, for instance by providing batteries having reduced acid stratification, mitigating the formation of dendrites, and/or having improved cycling performance.

In accordance with at least select embodiments, the present disclosure or invention may address the above issues or needs. In accordance with at least certain objects, aspects, or embodiments, the present disclosure or invention may provide an improved separator and/or battery which overcomes the aforementioned problems, for instance by providing batteries mitigating the formation of dendrites, having improved charge acceptance, and/or having improved cycling performance.

In accordance with at least select embodiments, the present disclosure or invention is directed to novel or improved separators, battery separators, battery separators incorporating carbon, battery separators incorporating conductive carbon, EFB separators, cells, batteries, systems, and/or methods of manufacture and/or use of such novel separators, cells, and/or batteries. In accordance with at least certain embodiments, the present disclosure or invention is directed to novel or improved battery separators for flat-plate batteries, tubular batteries, flooded lead acid batteries, enhanced flooded lead acid batteries ("EFBs"), deep-cycle batteries, gel batteries, absorptive glass mat ("AGM") batteries, inverter batteries, solar or wind power storage batteries, vehicle batteries, starting-lighting-ignition ("SLI") vehicle batteries, idling-start-stop ("ISS") vehicle batteries, automobile batteries, truck batteries, motorcycle batteries, all-terrain vehicle batteries, forklift batteries, golf cart batteries, hybrid-electric vehicle batteries, electric vehicle batteries, e-rickshaw batteries, e-bike batteries, and/or improved methods of making and/or using such improved separators, cells, batteries, systems, and/or the like. In addition, disclosed herein are methods, systems and battery separators for enhancing battery performance and life, reducing battery failure, reducing acid stratification, mitigating sulfation and dendrite formation, improving oxidation stability, improving, maintaining, and/or lowering float current, improving end of charge current, decreasing the current and/or voltage needed to charge and/or fully charge a deep cycle battery, reducing internal electrical resistance, reducing antimony poisoning, increasing wettability, improving acid diffusion, improving uniformity in a lead acid battery, and/or improving cycle performance. In accordance with at least particular embodiments, the present disclosure or invention is directed to an improved separator wherein the novel separator includes decreased sulfation and dendrite formation and increased charge acceptance.

Selected embodiments of the present invention are provided with a lead acid battery separator having a porous membrane, scrim, and/or mat and a nucleation additive. The porous membrane may be selected from polyolefin, polyethylene, polypropylene, rubber, polyvinyl chloride, phenolic resins, cellulosic, synthetic wood pulp, glass fibers, synthetic fibers, natural rubbers, synthetic rubbers, latex, bisphenol formaldehyde, and combinations thereof. Should the separator be polyethylene, it may be ultra-high molecular weight polyethylene (UHMWPE).

The nucleation additive may be conductive. The nucleation additive may further be a form of carbon or barium sulfate. The carbon is in the form of conductive carbon, graphite, artificial graphite, activated carbon, carbon paper, acetylene black, carbon black, high surface area carbon black, graphene, high surface area graphene, keitjen black, carbon fibers, carbon filaments, carbon nanotubes, open-cell carbon foam, a carbon mat, carbon felt, carbon Buckminsterfullerene (Bucky Balls), an aqueous carbon suspension, and combinations thereof. The nucleation additive is within the porous membrane, scrim, and/or mat.

The nucleation additive may be applied to the porous membrane by any of the following methods: roller coating,

chemical vapor deposition, co-extrusion, a controlled burn to char said surface, a controlled burn to char said surface via plasma exposure, a controlled burn to char said surface via UV exposure, toner printing, ink-jet printing, flexography printing, lithography printing, slurry coating, spraying an aqueous carbon suspension, impregnation, and combinations thereof.

In select embodiments, the lead acid battery separator may be an AGM separator.

In other exemplary embodiments, the porous membrane, scrim, and/or mat may contain a particle-like filler, and a processing plasticizer. Carbon may further be on a surface of the separator with an amount of the particle-like filler. The particle-like filler may be any one of the following: dry finely divided silica, precipitated silica, amorphous silica, alumina, talc, or combinations thereof.

In certain embodiments, the processing plasticizer may be any one of the following: processing oil, paraffin-based mineral oil, mineral oil, or combinations thereof.

In select embodiments, the porous membrane, scrim, and/or mat may be provided with a performance-enhancing additive, which may be any of the following: a non-ionic surfactant, an ionic surfactant, an anionic surfactant, wetting agents, colorants, antistatic additives, UV-protection additives, antioxidants, or combinations thereof.

The porous membrane is provided with any one of the following: solid ribs, discrete broken ribs, continuous ribs, discontinuous ribs, angled ribs, linear ribs, longitudinal ribs extending substantially in a machine direction of said porous membrane, lateral ribs extending substantially in a cross-machine direction of said porous membrane, transverse ribs extending substantially in said cross-machine direction of the separator, serrations or serrated ribs, battlements or battlemented ribs, curved or sinusoidal ribs, disposed in a solid or broken zig-zag-like fashion, grooves, channels, textured areas, embossments, dimples, porous, non-porous, mini ribs, cross-mini ribs, and combinations thereof.

Also disclosed herein is a lead acid battery having an electrolyte, a positive electrode, a negative electrode, and a separator disposed therebetween, and a nucleation additive. The nucleation additive may preferable be stable in the electrolyte, and may be dispersed within the electrolyte. The nucleation additive may be at least semi-conductive. The separator is provided with the nucleation additive. In addition, the nucleation additive may be any one of the following: carbon, conductive carbon, graphite, artificial graphite, activated carbon, carbon paper, acetylene black, carbon black, high surface area carbon black, graphene, high surface area graphene, keitjen black, carbon fibers, carbon filaments, carbon nanotubes, open-cell carbon foam, a carbon mat, carbon felt, carbon Buckminsterfullerene (Bucky Balls), an aqueous carbon suspension, barium sulfate, and combinations thereof.

The nucleation additive is within the separator.

The nucleation additive may be incorporated into any of the following: a pasting paper, a scrim, and combinations thereof.

In some exemplary embodiments, the separator may be any of the following: polyolefin, UHMWPE, polyethylene, polypropylene, rubber, polyvinyl chloride, phenolic resins, cellulosic, synthetic wood pulp, glass fibers, synthetic fibers, natural rubbers, synthetic rubbers, latex, bisphenol formaldehyde, and combinations thereof. Other separator may be AGM separators.

The lead acid battery may be any of the following: a flat-plate battery, a flooded lead acid battery, an enhanced flooded lead acid battery, a deep-cycle battery, an absorptive glass mat battery, a tubular battery, an inverter battery, a vehicle battery, a SLI battery, an ISS battery, an automobile battery, a truck battery, a motorcycle battery, an all-terrain vehicle battery, a forklift battery, a golf cart battery, a hybrid-electric vehicle battery, an electric vehicle battery, an e-rickshaw battery, an e-trike battery, and an e-bike battery. The battery may operate in a partial state of charge, and while in motion or stationary.

Also disclosed herein is a vehicle that is provided with a battery, a separator, and a nucleation additive. The separator is provided with the nucleation additive, within the separator. In addition, the nucleation additive may be any one of the following: carbon, conductive carbon, graphite, artificial graphite, activated carbon, carbon paper, acetylene black, carbon black, high surface area carbon black, graphene, high surface area graphene, keitjen black, carbon fibers, carbon filaments, carbon nanotubes, open-cell carbon foam, a carbon mat, carbon felt, carbon Buckminsterfullerene (Bucky Balls), an aqueous carbon suspension, barium sulfate, and combinations thereof.

The nucleation additive may be incorporated into any of the following: a pasting paper, a scrim, and combinations thereof. In select embodiments, the battery may operate in a partial state of charge. In other embodiments, the vehicle may be any of the following: an automobile, a truck, a motorcycle, an all-terrain vehicle, a forklift, a golf cart, a hybrid-electric vehicle, an electric vehicle, an e-rickshaw, an e-trike, and an e-bike.

## Brief Description of the Figures

Fig. 1A illustrates a typical lead acid battery.

Fig. 1B depicts a typical single cell of a typical lead acid battery.

Fig. 1C illustrates acid stratification in a typical lead acid battery cell as generally depicted in Fig. 1B.

Fig. 2A depicts an exemplary battery separator situated between a positive and negative electrode as may be found in a typical lead acid battery.

Fig. 2B depicts an exemplary battery separator and swollen negative active material ("NAM") as may be found in a typical lead acid battery.

Fig. 2C depicts an exemplary embodiment of a battery separator of the present invention disposed between a positive electrode and negative electrode as may be found in a typical lead acid battery; the negative electrode is shown with swollen NAM.

Fig. 2D illustrates an exemplary embodiment of a rib profile for an exemplary embodiment of a separator of the present invention.

Figs. 3A-3C are SEM images of graphite.

Fig. 3D is an SEM image of artificial graphite.

Fig. 3E is an SEM image of acetylene black.

Figs. 4A-4C are SEM images of lead sulfate growth on lead electrodes in the presence of a carbon coated separator.

Figs. 5A-5C are SEM images of lead sulfate growth on separators with carbon in the extrusion mix.

Figs. 6A-6C are SEM images of lead sulfate growth on lead electrodes in the presence of a separators with carbon in the extrusion mix.

Figs. 7A-7C depict basic physical characteristics of an exemplary battery separator of the present disclosure.

Figs. 8A-8E illustrate a general depiction of various rib patterns of exemplary battery separators of the present disclosure.

Figs. 9A and 9B depict the dynamic state of charge for a test cell utilizing a separator with an acetylene black coating compared to a control cell having a commercially available separator.

## Detailed Description

In accordance with at least select embodiments, the present disclosure or invention may address the above issues or needs. In accordance with at least certain objects, aspects, or embodiments, the present disclosure or invention may provide an improved separator, battery separator, battery separator incorporating carbon, battery separator incorporating conductive carbon, EFB separator, and/or battery which overcomes the aforementioned problems, for instance by providing batteries mitigating the formation of dendrites, having improved charge acceptance, and/or having improved cycling performance.

As shown in Fig. 1A, an exemplary lead acid battery 50 is shown having a positive terminal 51 and a negative terminal 53. Within the battery 50 is an array of alternating positive plates or electrodes 52 and negative plates or electrodes 54 with an exemplary separator 100 disposed therebetween. The positive and negative electrodes 52, 54, and separators 100 are substantially submerged within an aqueous electrolyte solution 56. The electrolyte may be, for example, a solution of sulfuric acid ($H_2SO_4$) and water ($H_2O$). The electrolyte solution may have, for example, a specific gravity of approximately 1.28, with a range of approximately 1.215 to 1.300. The positive electrodes 52 are in electrical communication with the positive terminal 51, and the negative electrodes 54 are in contact with the negative terminal 53.

Referring to Fig. 1B, a typical cell of a typical lead acid battery is shown. Fig. 1C depicts It should be noted that Figs. 1A-1C are not drawn to scale. It should also be noted that in a typical lead acid battery, the positive electrode 52 is in intimate contact with the separator 100, and likewise, the negative electrode 54 is also in intimate contact with the separator 100. The separator serves to keep the positive and negative electrodes 52, 54 separate and prevent the battery from shorting.

Fig. 1C is a schematic representation of acid stratification as may be seen in certain lead acid batteries. Sulfuric acid is heavier than water and will tend to settle to the bottom portion of the electrolyte leaving the bottom of the electrolyte at a higher than optimal specific gravity and the top of the electrolyte predominantly water with a lower than optimal specific gravity. This acid stratification affects both the performance and life of the battery as only the lower portions of the electrode are in contact with the sulfuric acid. Acid stratification can be mitigated by overcharging the battery or keeping it charged at or near 100% capacity. During overcharging, gas bubbles tend to form on the electrodes and rise to the surface providing a mixing action to the electrolyte. In continuous conditions wherein the battery is in a partial state of charge ("PSoC"), this overcharging action never occurs and the extent to which the electrolyte is stratified becomes greater.

The reaction at the lead dioxide ($PbO_2$) positive (+) electrode 52 (the "positive half-reaction") supplies electrons and is left positive. This positive half-reaction during discharge at the lead dioxide ($PbO_2$) positive (+) electrode 52 produces lead sulfate ($PbSO_4$) and water ($H_2O$) and is shown below in *Eq. 1*:

$$PbO_2 + SO_4^{-2} + 4H^+ + 2e^- \leftrightarrow PbSO_4 + 2H_2O \ (Eq.\ 1)$$

where:

- $PbO_2$ is the solid lead dioxide positive (+) electrode 52;
- $SO_4^{-2}$ is aqueous;
- $4H^+$ is aqueous;
- $2e^-$ is in the solid lead dioxide ($PbO_2$) positive (+) electrode 52;
- $PbSO_4$ is a solid precipitate within the aqueous electrolyte 56; and
- $H_2O$ is a liquid.

The positive half-reaction is reversible upon charging the battery 50.

The negative half-reaction at the lead (Pb) negative (-) electrode 54 (the "negative half-reaction") supplies positive ions and is left negative. The negative half-reaction during discharge produces lead sulfate ($PbSO_4$) and negative ions ($e^-$) and is shown below in *Eq. 2*:

$$Pb + SO_4^{-2} \leftrightarrow PbSO_4 + 2e^- \qquad (Eq.\ 2)$$

where:

- *Pb* is the solid lead negative (-) electrode 54;
- $SO_4^{-2}$ is aqueous;
- $PbSO_4$ is a solid precipitate within the aqueous electrolyte 56; and
- $2e^-$ is in the lead (Pb) negative (-) electrode 54;

The negative half-reaction is reversible upon charging the battery 50.

Together, these half-reactions give way to the overall chemical reaction of the lead acid battery, as shown below in *Eq. 3*:

$$Pb + PbO_2 + 2H_2SO_4 \leftrightarrow 2PbSO_4 + 2H_2O \qquad \text{(Eq. 3)}$$

where:

- *Pb* is the solid negative (-) electrode 54;
- $PbO_2$ is the solid positive (+) electrode 52;
- $H_2SO_4$ is a liquid within the aqueous electrolyte 56;
- $PbSO_4$ is a solid precipitate within the aqueous electrolyte 56; and

- $H_2O$ is a liquid within the aqueous electrolyte 56.

The overall chemical reaction is reversible upon charging the battery 50.

For each of the above reactions, discharge occurs moving from left to right, and charging occurs moving right to left.

As can be seen from the overall reaction, discharging the battery produces lead sulfate ($PbSO_4$), and water ($H_2O$). The production of water during discharge leads to acid starvation (i.e., the sulfuric acid in the electrolyte is consumed), which further exacerbates the acid stratification discussed above. In addition, lead (Pb) in the electrode plates goes into solution in a water environment, which makes more lead available to generate lead sulfate. Because the reaction is reversible during charging, charging and/or overcharging the battery allows some of the lead sulfate to return to its constituent parts (i.e., lead (Pb), lead dioxide ($PbO_2$), and sulfuric acid ($H_2SO_4$)). However, lead also precipitates in sulfuric acid and therefore some of the lead sulfate will not return to its constituent parts and will be left as a solid lead sulfate crystal.

Deep cycle batteries, such as those used in golf carts (also known as golf cars), forklifts, e-rickshaws, e-bikes, idle-stop-start ("ISS") vehicles, and the like, operate nearly constantly in a partial state of charge. Such batteries, with the possible exception of ISS batteries, are used for 8-12 hours or more being discharged before they are charged. Furthermore, the operators of those batteries may not over-charge the batteries before returning them to service. ISS batteries experience cycles of discharge and brief intermittent charging cycles, and generally rarely achieve a full charge or are ever overcharged. These batteries and others, are both prone to acid stratification, acid starvation, or both. These batteries (or areas within the battery) are therefore subject to periods in which the electrolyte has a high water concentration. These batteries (or areas within the battery) are also subject to periods in which the electrolyte has a higher acid concentration. Thus, the lead in the electrodes have an opportunity to go into solution within the electrolyte and then precipitate into lead sulfate crystals. Over time and through many discharge and charge cycles, the lead sulfate crystals build upon themselves forming dendrites. This is known as sulfation. As these dendrites grow over time, they may short the battery or a battery cell. This can lead to total failure of the battery or at the very least lead to poor performance and a shortened battery life.

The inventors hypothesize that, upon charging the battery, smaller lead sulfate crystals return to solution more readily as compared to larger crystals. It is believed that providing nucleation sites give the crystals a starting point of formation. Furthermore, many nucleation sites may provide many places for crystals to form, and thus spread out the total amount of lead sulfate into a large number of smaller crystals as opposed to a smaller number of larger crystals. These smaller crystals will then more easily go back into solution during a charging cycle of the battery and therefore hinder the growth of dendrites. The inventors have identified various nucleation additives for the separator, such as carbon and barium sulfate ($BaSO_4$), as exemplary means to provide these nucleation sites. These additives will be discussed herein. In addition to providing nucleation sites, the carbon may also increase the battery charge acceptance and increase battery capacity.

Another benefit that the carbon provides is increased charge acceptance. One hypothesis of the inventors' poses that highly conductive carbon particles provide an electronically conductive pathway to the active material and therefore improving the active material utilization. Another hypothesis of the inventors' is that the carbon increases the capacitance of the separator and thus the entire battery system.

## Physical Description

An exemplary separator may be provided with a web of a porous membrane, such as a microporous membrane having pores less than about 5 μm, preferably less than about 1 μm, a mesoporous membrane, or a macroporous membrane having pores greater than about 1 μm. The porous membrane may preferably have a pore size that is submicron up to 100 μm, and in certain embodiments between about 0.1 μm to about 10 μm. Porosity of the separator membrane described herein may be greater than approximately 50% to approximately 60% in certain embodiments, and certain other preferred embodiments may have a porosity greater than approximately 65%. In certain select embodiments, the porous membrane may be flat or possess ribs that extend from a surface thereof.

## Ribs

Particular goals of the present invention, as a means to increase dynamic charge acceptance, include maximizing the area of intimate contact between the porous membrane and negative active material, minimizing the effects of NAM swelling (e.g., acid starvation) while also taking advantage of any motion that the battery may be subject to maximize acid mixing to reduce the effects of acid stratification. Both of these are problems exhibited by batteries operating in a partial state of charge.

The inventors have found that one way to minimize the effects of NAM swelling is to maximize the resiliency

of the separator such as to reduce the likelihood that the NAM will deflect the porous backweb into the PAM. A particular method of increasing the separator resiliency is to increase the porous membrane backweb thickness. This however also increases the separator's electrical resistance (to name but one detriment of a thicker backweb) which negatively affects the performance of the battery. The inventors have discovered that increasing the contact points between the separator and the positive electrode acts to stiffen the backweb between contact points. Increasing the number of ribs to achieve this goal also increases the amount of contact area between the separator and positive electrode. Minimizing the contact area is believed to lower the electrical resistance of the separator as well as opening more surface area of the electrodes to the electrolyte for the electrochemical reactions that provide the functionality of the battery. It is also believed that the reduced contact area reduces the opportunities for dendrites to form through the separator and cause an electrical short. The issue of dendrite formation is discussed hereinafter. A further goal is to maximize electrolyte or acid mixing for batteries that are used in motion in order to minimize the effects of acid stratification. Furthermore, solid ribs do not facilitate the goal of acid mixing to reduce acid stratification.

The inventors have found that a separator may be provided with resilient means to resist or mitigate backweb deflection under the forces and pressures exerted by NAM swelling, which leads to acid starvation, by maximizing the number of contact points while simultaneously minimizing the contact area between the separator and the adjacent electrodes as a select exemplary preferred embodiment. The inventors have found another select exemplary embodiment may provide a separator with acid mixing means for reducing, mitigating, or reversing the effects of acid stratification by maximizing the number of discrete contact points between the separator and the adjacent electrodes. Another select exemplary embodiment may provide the separator with dendrite mitigation means to reduce or mitigate lead sulfate ($PbSO_4$) dendrite growth. The inventors have determined that such resilient means, acid mixing means, and dendrite mitigation means may be addressed, achieved, or at least partially addressed and/or achieved by the design of the rib structure. Accordingly, select embodiments described herein rely on rib structure in order to balance these parameters to achieve the desired goals, to provide resilient means, acid mixing means, and dendrite mitigation means, and/or to at least partially address and/or achieve balance of these parameters and/or the desired resilient means, acid mixing means, and/or dendrite mitigation means.

Fig. 2A depicts an exemplary battery separator situated between a positive and negative electrode as may be found in a typical lead acid battery.

Fig. 2B depicts an exemplary battery separator and swollen negative active material ("NAM") as may be found in a typical lead acid battery.

Fig. 2C depicts an exemplary embodiment of a battery separator of the present invention disposed between a positive electrode and negative electrode as may be found in a typical lead acid battery; the negative electrode is shown with swollen NAM.

The ribs 104, 106 may be a uniform set, an alternating set, or a mix or combination of solid, discrete broken ribs, continuous, discontinuous, angled, linear, longitudinal ribs extending substantially in a machine direction MD (i.e., running from top to bottom of the separator in the battery) of the separator, lateral ribs extending substantially in a cross-machine direction CMD of the separator, transverse ribs extending substantially in a cross-machine direction CMD (i.e., in a lateral direction of the separator in the battery, orthogonal to the MD) of the separator, cross ribs extending substantially in a cross-machine direction of the separator, discrete teeth or toothed ribs, serrations, serrated ribs, battlements or battlemented ribs, curved or sinusoidal, disposed in a solid or broken zig-zag-like fashion, grooves, channels, textured areas, embossments, dimples, porous, non-porous, mini ribs or cross-mini ribs, and/or the like, and combinations thereof. Further, either set of the ribs 104, 106 may extend from or into the positive side, the negative side, or both sides.

Referring now to Fig. 2D, an exemplary separator is provided with positive ribs 104 substantially aligned in a machine direction MD of the separator that are intended to contact a positive electrode in an exemplary battery. The separator is further provided with negative ribs 106 substantially aligned in a machine direction of the separator and substantially parallel to the positive ribs. The negative ribs are intended to contact a negative electrode in an exemplary battery. While the negative ribs in this illustrated example are substantially aligned in a machine direction of the separator, they may alternatively be substantially aligned in the cross-machine direction, typically known as negative cross-ribs.

With continued reference to Fig. 2D, select embodiments of the inventive separator are provided with an array of positive ribs. The positive ribs are provided with a base portion 104a that may extend the length of the separator in the machine direction. Spaced teeth, discontinuous peaks, or other protrusions 104b may then extend from the surface of that base portion, such that the teeth 104b are raised above the underlying surface of the porous membrane backweb. Furthermore, the base portion may be wider than the teeth themselves. The positive ribs run substantially parallel to one another at a typical spacing of approximately 2.5 mm to approximately 6.0 mm, with a typical spacing of approximately 3.5 mm. The height of the positive ribs (combined teeth and base portion) as measured from the surface of then porous membrane backweb may be approximately 10 $\mu$m to approximately 2.0 mm, with a typical height of approximately 0.5 mm. Exemplary rib teeth of adjacent ribs may be substantially in line with one another. However as pictured in Fig. 2D, exemplary teeth may be offset from one another from one rib to an adjacent rib, either entirely or partially out of phase from an adjacent rib. As shown, the teeth are entirely out of phase from one rib to an adjacent rib. The positive rib teeth

may be spaced at a pitch in the machine direction of the separator of approximately 3.0 mm to approximately 6.0 mm, with a typical spacing of approximately 4.5 mm.

As shown in Fig. 2D, negative ribs are depicted as being substantially parallel to the machine direction of the separator. However, they may alternatively be substantially parallel to a cross machine direction. The depicted exemplary negative ribs are shown as being solid and substantially straight. However, they may alternatively be toothed in a generally similar manner as the positive ribs shown in Fig. 2D. The negative ribs may be spaced at a pitch of approximately 10 μm to approximately 10.0 mm, with a preferred pitch between approximately 700 μm and approximately 800 μm, with a more preferred nominal pitch of approximately 740 μm. The height of the negative ribs as measured from the surface of the backweb may be approximately 10 μm to approximately 2.0 mm.

It should be noted that the positive ribs may alternatively be placed in an exemplary battery such that they contact the negative electrode. Likewise, the negative ribs may alternatively be placed in an exemplary battery such that they contact the positive electrode.

Table 1, below, details the rib count and the percentage of surface contact area for four separators (one exemplary inventive separator and three control separators) that are 162 mm by 162 mm (262 $cm^2$). As shown, the exemplary inventive separator has 43 toothed ribs uniformly spaced across the width of the separator in the cross-machine direction. The teeth of the positive ribs on the exemplary inventive separator contacts 3.8% of the 262 $cm^2$ on the positive electrode. The details of the control separators are further detailed in Table 1. It is appreciated that control separators #1, #2, and #3 are typical of commercially available separators presently used flooded lead acid batteries generally and presently available on the market.

Table 1

| Separator | Ribs (No. (configuration)) | Contact area (% of total area) |
|---|---|---|
| Inventive Separator | 43 (toothed ribs) | 3.8% |
| Control #1 | 22 (solid ribs) | 4.8% |
| Control #2 | 18 (solid ribs) | 3.9% |
| Control #3 | 11 (solid ribs) | 2.9% |

As stated, the inventors found that maximizing the number of contact points while simultaneously minimizing the contact area achieves the goal of increasing separator resiliency while keeping electrical resistance under control. Furthermore, the toothed design helps facilitate acid mixing by utilizing any motion to which a battery may be subjected. The teeth of the separator ribs may be approximately 2.5 mm to approximately 6.0 mm apart from the closest adjacent tooth. The inventors have found that a preferred, non-limiting, distance is approximately 4.2 mm between adjacent teeth. In addition, the teeth being offset from adjacent rows being completely out of phase helps to facilitate acid mixing. The inventors have also found that the base portion helps to stiffen the backweb enough to provide resilience to the NAM swelling.

It is appreciated that while the exemplary inventive ribs are shown and described as being positive ribs, they may nonetheless be provided on the negative side of the separator, and the illustrated and described negative ribs may be provided on the positive side of the separator.

The positive or negative ribs may additionally be any form or combination of solid ribs, discrete broken ribs, continuous ribs, discontinuous ribs, angled ribs, linear ribs, longitudinal ribs extending substantially in a machine direction of said porous membrane, lateral ribs extending substantially in a cross-machine direction of said porous membrane, transverse ribs extending substantially in said cross-machine direction of the separator, discrete teeth, toothed ribs, serrations, serrated ribs, battlements, battlemented ribs, curved ribs, sinusoidal ribs, disposed in a continuous zig-zag-sawtooth-like fashion, disposed in a broken discontinuous zig-zag-sawtooth-like fashion, grooves, channels, textured areas, embossments, dimples, columns, mini columns, porous, non-porous, mini ribs, cross-mini ribs, and combinations thereof.

The positive or negative ribs may additionally be any form or combination of being defined by an angle that is neither parallel nor orthogonal relative to an edge of the separator. Furthermore, that angle may vary throughout the teeth or rows of the ribs. The angled rib pattern may be a possibly preferred Daramic® RipTide™ acid mixing rib profile that can help reduce or eliminate acid stratification in certain batteries. Moreover, the angle may be defined as being relative to a machine direction of the porous membrane and the angle may between approximately greater than zero degrees (0°) and approximately less than 180 degrees (180°), and approximately greater than 180 degrees (180°) and approximately less than 360 degrees (360°).

The ribs may extend uniformly across the width of the separator, from lateral edge to lateral edge. This is known as a universal profile. Alternatively, the separator may have side panels adjacent to the lateral edges with minor ribs

disposed in the side panel. These minor ribs may be more closely spaced and smaller than the primary ribs. For instance, the minor ribs may be 25% to 50% of the height of the primary ribs. The side panels may alternatively be flat. The side panels may assist in sealing an edge of the separator to another edge of the separator as done when enveloping the separator, which is discussed hereinbelow.

In select exemplary embodiments, at least a portion of the negative ribs may preferably have a height of approximately 5% to approximately 100% of the height of the positive ribs. In some exemplary embodiments, the negative rib height may be approximately 5%, 10%, 15%, 20%, 25%, 30%, 35%, 40%, 45%, 50%, 55%, 60%, 65%, 70%, 75%, 80%, 95%, or 100% compared to the positive rib height. In other exemplary embodiments, the negative rib height may no greater than approximately 100%, 95%, 90%, 85%, 80%, 75%, 70%, 65%, 60%, 55%, 50%, 45%, 40%, 35%, 30%, 25%, 20%, 15%, 10%, or 5% compared to the positive rib height.

In some select embodiments, at least a portion of the porous membrane may have negative ribs that are longitudinal or transverse or cross-ribs. The negative ribs may be parallel to the top edge of the separator, or may be disposed at an angle thereto. For instance, the negative ribs may be oriented approximately 0°, 5°, 15°, 25°, 30°, 45°, 60°, 70°, 80°, or 90° relative to the top edge. The cross-ribs may be oriented approximately 0° to approximately 30°, approximately 30° to approximately 45°, approximately 45° to approximately 60°, approximately 30° to approximately 60°, approximately 30° to approximately 90°, or approximately 60° to approximately 90° relative to the top edge.

Certain exemplary embodiments may possess a base portion. If present, it may have an average base height of from approximately 5 μm to approximately 200 μm. For example, the average base height may be greater than or equal to approximately 5 μm, 10 μm, 20 μm, 30 μm, 40 μm, 50 μm, 100 μm, or 200 μm. Further, if present it may have an average base width that is from approximately 0.0 μm to approximately 50 μm wider than the tooth width. For example, the average base width may be greater than or equal to approximately 0.0 μm, 5 μm, 10 μm, 20 μm, 30 μm, 40 μm, or 50 μm wider than the tooth width.

Certain exemplary embodiments may possess teeth or toothed ribs. If present, they may have an average tip length of from approximately 50 μm to approximately 1.0 mm. For example, the average tip length may be greater than or equal to approximately 50 μm, 100 μm, 200 μm, 300 μm, 400 μm, 500 μm, 600 μm, 700 μm, 800 μm, 900 μm, or 1.0 mm. Alternatively, they may be no greater than or equal to 1.0 mm, 900 μm, 800 μm, 700 μm, 600 μm, 500 μm, 400 μm, 300 μm, 200 μm, 100 μm, or 50 μm.

At least a portion of the teeth or toothed ribs may have an average tooth base length of from approximately 50 μm to approximately 1.0 mm. For example, the average tooth base length may be approximately 50 μm, 100 μm, 200 μm, 300 μm, 400 μm, 500 μm, 600 μm, 700 μm, 800 μm, 900 μm, or 1.0 mm. Alternatively, they may be no greater than or equal to approximately 1.0 mm, 900 μm, 800 μm, 700 μm, 600 μm, 500 μm, 400 μm, 300 μm, 200 μm, 100 μm, or 50 μm.

At least a portion of the teeth or toothed ribs may have an average height (combined base portion height and teeth height) of from approximately 50 μm to approximately 1.0 mm. For example, the average height may be approximately 50 μm, 100 μm, 200 μm, 300 μm, 400 μm, 500 μm, 600 μm, 700 μm, 800 μm, 900 μm, or 1.0 mm. Alternatively, they may be no greater than or equal to approximately 1.0 mm, 900 μm, 800 μm, 700 μm, 600 μm, 500 μm, 400 μm, 300 μm, 200 μm, 100 μm, or 50 μm.

At least a portion of the teeth or toothed ribs may have an average center-to-center pitch within a column in the machine direction of from approximately 100 μm to approximately 50 mm. For example, the average center-to-center pitch may be greater than or equal to approximately 50 μm, 100 μm, 200 μm, 300 μm, 400 μm, 500 μm, 600 μm, 700 μm, 800 μm, 900 μm, or 1.0 mm, and in similar increments up to 50 mm. Alternatively, they may be no greater than or equal to approximately 50 μm, 100 μm, 200 μm, 300 μm, 400 μm, 500 μm, 600 μm, 700 μm, 800 μm, 900 μm, or 1.0 mm, and in similar increments up to 50 mm. In addition, adjacent columns of teeth or toothed ribs may be identically disposed at the same position in a machine direction or offset. In an offset configuration, adjacent teeth or toothed ribs are disposed at different positions in the machine direction.

At least a portion of the teeth or toothed ribs may have an average height to base width ratio of from approximately 0.1:1.0 to approximately 500:1.0. For example, the average height to base width ratio may be approximately 0.1:1.0, 25:1.0, 50:1.0, 100:1.0, 150:1.0, 200:1.0, 250:1.0, 300:1.0, 350:1, 450:1.0, or 500:1.0. Alternatively, the average height to base width ratio may be no greater than or equal to approximately 500:1.0, 450:1.0, 400:1.0, 350:1.0, 300:1.0, 250:1.0, 200:1.0, 150:1.0, 100:1.0, 50:1.0, 25:1.0, or 0.1:1.0.

At least a portion of the teeth or toothed ribs can have average base width to tip width ratio of from approximately 1,000:1.0 to approximately 0.1:1.0. For example, the average base width to tip width ratio may be approximately 0.1:1.0, 1.0:1.0, 2:1.0, 3:1.0, 4:1.0, 5:1.0, 6:1.0, 7:1.0, 8:1.0, 9:1.0, 10:1.0, 15:1.0, 20:1.0, 25:1.0, 50:1.0, 100:1.0, 150:1.0, 200:1.0, 250:1.0, 300:1.0, 350:1.0, 450:1.0, 500:1.0, 550:1.0, 600:1.0, 650:1.0, 700:1.0, 750:1.0, 800:1.0, 850:1.0, 900:1.0, 950:1.0, or 1,000:1.0. Alternatively, the average base width to tip width ratio may be no greater than approximately 1,000:1.0, 950:1.0, 900:1.0, 850:1.0, 800:1.0, 750:1.0, 700:1.0, 650:1.0, 600:1.0, 550:1.0, 500:1.0, 450:1.0, 400:1.0, 350:1.0, 300:1.0, 250:1.0, 200:1.0, 150:1.0, 100:1.0, 50:1.0, 25:1.0, 20:1.0, 15:1.0, 10:1.0, 9:1.0, 8:1.0, 7:1.0, 6:1.0, 5:1.0, 4:1.0, 3:1.0, 2:1.0, 1.0:1.0, or 0.1:1.0.

In certain embodiments, the improved separator may include a porous membrane that may be made of any one or more of: a natural or synthetic base material; a processing plasticizer; a filler; natural or synthetic rubber(s) or latex, a nucleation providing additive, and/or one or more other additives and/or coatings, and/or the like, and combinations thereof.

In certain embodiments, exemplary natural or synthetic base materials may include: polymers; thermoplastic polymers; phenolic resins; natural or synthetic rubbers; synthetic wood pulp; lignins; glass fibers; synthetic fibers; cellulosic fibers; and combinations thereof. In certain preferable embodiments, an exemplary separator may be a porous membrane made from thermoplastic polymers. Exemplary thermoplastic polymers may, in principle, include all acid-resistant thermoplastic materials suitable for use in lead acid batteries. In certain preferred embodiments, exemplary thermoplastic polymers may include polyvinyls and polyolefins. In certain embodiments, the polyvinyls may include, for example, polyvinyl chloride ("PVC"). In certain preferred embodiments, the polyolefins may include, for example, polyethylene, polypropylene, ethylene-butene copolymer, and combinations thereof, but preferably polyethylene. In certain embodiments, exemplary natural or synthetic rubbers may include, for example, latex, uncross-linked or cross-linked rubbers, crumb or ground rubber, and combinations thereof.

In certain embodiments, the porous membrane layer preferably includes a polyolefin, specifically polyethylene. Preferably, the polyethylene is high molecular weight polyethylene ("HMWPE"), (e.g., polyethylene having a molecular weight of at least 600,000). Even more preferably, the polyethylene is ultra-high molecular weight polyethylene ("UHMWPE"). Exemplary UHMWPE may have a molecular weight of at least 1,000,000, in particular more than 4,000,000, and most preferably 5,000,000 to 8,000,000 as measured by viscosimetry and calculated by Margolie's equation. Further, exemplary UHMWPE may possess a standard load melt index of substantially zero (0) as measured as specified in ASTM D 1238 (Condition E) using a standard load of 2,160 g. Moreover, exemplary UHMWPE may have a viscosity number of not less than 600 ml/g, preferably not less than 1,000 ml/g, more preferably not less than 2,000 ml/g, and most preferably not less than 3,000 ml/g, as determined in a solution of 0.02 g of polyolefin in 100 g of decalin at 130°C.

In certain embodiments, exemplary processing plasticizers may include processing oil, petroleum oil, paraffin-based mineral oil, mineral oil, and combinations thereof.

The separator can contain a filler having a high structural morphology. Exemplary fillers can include: silica, dry finely divided silica; precipitated silica; amorphous silica; highly friable silica; alumina; talc; fish meal; fish bone meal; carbon; carbon black; and the like, and combinations thereof. In certain preferred embodiments, the filler is one or more silicas. High structural morphology refers to increased surface area. The filler can have a high surface area, for instance, greater than approximately 100 $m^2/g$, approximately 110 $m^2/g$, approximately 120 $m^2/g$, approximately 130 $m^2/g$, approximately 140 $m^2/g$, approximately 150 $m^2/g$, approximately 160 $m^2/g$, approximately 170 $m^2/g$, approximately 180 $m^2/g$, approximately 190 $m^2/g$, approximately 200 $m^2/g$, approximately 210 $m^2/g$, approximately 220 $m^2/g$, approximately 230 $m^2/g$, approximately 240 $m^2/g$, or approximately 250 $m^2/g$. In some embodiments, the filler (e.g., silica) can have a surface area from approximately 100-300 $m^2/g$, approximately 125-275 $m^2/g$, approximately 150-250 $m^2/g$, or preferably approximately 170-220 $m^2/g$. Surface area can be assessed using TriStar 3000TM for multipoint BET nitrogen surface area. High structural morphology permits the filler to hold more oil during the manufacturing process. For instance, a filler with high structural morphology has a high level of oil absorption, for instance, greater than about 150 ml/100 g, approximately 175 ml/100 g, approximately 200 ml/100 g, approximately 225 ml/100 g, approximately 250 ml/100 g, approximately 275 ml/100 g, approximately 300 ml/100 g, approximately 325 ml/100 g, or approximately 350 ml/100 g. In some embodiments the filler (e.g., silica) can have an oil absorption from approximately 200-500 ml/100 g, approximately 200-400 ml/100 g, approximately 225-375 ml/100 g, approximately 225-350 ml/100 g, approximately 225-325 ml/100 g, preferably approximately 250-300 ml/100 g. In some instances, a silica filler is used having an oil absorption of approximately 266 ml/100 g. Such a silica filler has a moisture content of approximately 5.1%, a BET surface area of approximately 178 m2/g, an average particle size of approximately 23 μm, a sieve residue 230 mesh value of approximately 0.1 %, and a bulk density of approximately 135 g/L.

Silica with relatively high levels of oil absorption and relatively high levels of affinity for the plasticizer (e.g., mineral oil) becomes desirably dispersible in the mixture of polyolefin (e.g., polyethylene) and the plasticizer when forming an exemplary lead acid battery separator of the type shown herein. In the past, some separators have experienced the detriment of poor dispersibility caused by silica aggregation when large amounts of silica are used to make such separators or membranes. In at least certain of the inventive separators shown and described herein, the polyolefin, such as polyethylene, forms a shish-kebab structure, since there are few silica aggregations or agglomerates that inhibit the molecular motion of the polyolefin at the time of cooling the molten polyolefin. All of this contributes to improved ion permeability through the resulting separator membrane, and the formation of the shish-kebab structure or morphology means that mechanical strength is maintained or even improved while a lower overall ER separator is produced.

In some select embodiments, the filler (e.g., silica) has an average particle size no greater than approximately 25 μm, in some instances, no greater than approximately 22 μm, 20 μm, 18 μm, 15 μm, or 10 μm. In some instances, the average particle size of the filler particles is 15-25 μm. The particle size of the silica filler and/or the surface area of the silica filler contributes to the oil absorption of the silica filler. Silica particles in the final product or separator may fall

within the sizes described above. However, the initial silica used as raw material may come as one or more agglomerates and/or aggregates and may have sizes around approximately 200 μm or more.

In some preferred embodiments, the silica used to make the inventive separators has an increased amount of or number of surface silanol groups (surface hydroxyl groups) compared with silica fillers used previously to make lead acid battery separators. For example, the silica fillers that may be used with certain preferred embodiments herein may be those silica fillers having at least approximately 10%, at least 15%, at least 20%, at least 25%, at least 30%, or at least 35% more silanol and/or hydroxyl surface groups compared with known silica fillers used to make known polyolefin lead acid battery separators.

The ratio (Si-OH)/Si of silanol groups (Si-OH) to elemental silicon (Si) can be measured, for example, as follows.

1. Freeze-crush a polyolefin porous membrane (where certain inventive membranes contain a certain variety of oil-absorbing silica according to the present invention), and prepare the powder-like sample for the solid-state nuclear magnetic resonance spectroscopy ($^{29}$Si -NMR).

2. Perform the $^{29}$Si-NMR to the powder-like sample, and observe the spectrums including the Si spectrum strength which is directly bonding to a hydroxyl group (Spectrum: $Q_2$ and $Q_3$) and the Si spectrum strength which is only directly bonding to an oxygen atom (Spectrum: $Q_4$), wherein the molecular structure of each NMR peak spectrum can be delineated as follows:

- $Q_2$: $(SiO)_2$ - Si* - $(OH)_2$: having two hydroxyl groups
- $Q_3$: $(SiO)_3$ - Si* - (OH): having one hydroxyl group
- $Q_4$: $(SiO)_4$ - Si*: All Si bondings are SiO
- Where Si* is proved element by NMR observation.

3. The conditions for $^{29}$Si-NMR used for observation are as follows:

- Instrument: Bruker BioSpin Avance 500
- Resonance Frequency: 99.36 MHz
- Sample amount: 250 mg
- NMR Tube: 7 m$\varphi$
- Observing Method: DD/MAS
- Pulse Width: 45°
- Repetition time: 100 sec
- Scans:800
- Magic Angle Spinning: 5,000 Hz
- Chemical Shift Reference: Silicone Rubber as -22.43 ppm (External Ref)

4. Numerically, separate peaks of the spectrum, and calculate the area ratio of each peak belonging to $Q_2$, $Q_3$ and $Q_4$. After that, based on the ratios, calculate the molar ratio of hydroxyl groups (-OH) bonding directly to Si. The conditions for the numerical peak separation is conducted in the following manner:

- Fitting region: -80 to -130 ppm
- Initial peak top: -93 ppm for $Q_2$, -101ppm for $Q_3$, -111ppm for $Q_4$, respectively.
- Initial full width half maximum: 400Hz for $Q_2$, 350Hz for $Q_3$, 450Hz for $Q_4$, respectively.

- Gaussian function ratio: 80% at initial and 70 to 100% while fitting.

5. The peak area ratios (Total is 100) of $Q_2$, $Q_3$, and $Q_4$ are calculated based on the each peak obtained by fitting. The NMR peak area corresponded to the molecular number of each silicate bonding structure (thus, for the $Q_4$ NMR peak, four Si-O-Si bonds are present within that silicate structure; for the $Q_3$ NMR peak, three Si-O-Si bonds are present within that silicate structure while one Si-OH bond is present; and for the $Q_2$ NMR peak, two Si-O-Si bonds are present within that silicate structure while two Si-OH bonds are present). Therefore each number of the hydroxyl group (-OH) of $Q_2$, $Q_3$, and $Q_4$ is multiplied by two (2) one (1), and zero (0), respectively. These three results are summed. The summed value displays the mole ratio of hydroxyl groups (-OH) directly bonding to Si.

In certain embodiments, the silica may have a molecular ratio of OH to Si groups, measured by $^{29}$Si-NMR, that may be within a range of approximately 21:100 to 35:100, in some preferred embodiments approximately 23:100 to approximately 31:100, in certain preferred embodiments, approximately 25:100 to approximately 29:100, and in other preferred embodiments at least approximately 27:100 or greater.

In some select embodiments, use of the fillers described above permits the use of a greater proportion of processing oil during the extrusion step. As the porous structure in the separator is formed, in part, by removal of the oil after the extrusion, higher initial absorbed amounts of oil results in higher porosity or higher void volume. While processing oil is an integral component of the extrusion step, oil is a nonconducting component of the separator. Residual oil in the separator protects the separator from oxidation when in contact with the positive electrode. The precise amount of oil in the processing step may be controlled in the manufacture of conventional separators. Generally speaking, conventional separators are manufactured using 50-70% processing oil, in some embodiments, 55-65%, in some embodiments, 60-65%, and in some embodiments, about 62% by weight processing oil. Reducing oil below about 59% is known to cause burning due to increased friction against the extruder components. However, increasing oil much above the prescribed amount may cause shrinking during the drying stage, leading to dimensional instability. Although previous attempts to increase oil content resulted in pore shrinkage or condensation during the oil removal, separators prepared as disclosed herein exhibit minimal, if any, shrinkage and condensation during oil removal. Thus, porosity can be increased without compromising pore size and dimensional stability, thereby decreasing electrical resistance.

In certain select embodiments, the use of the filler described above allows for a reduced final oil concentration in the finished separator. Since oil is a non-conductor, reducing oil content can increase the ionic conductivity of the separator and assist in lowering the ER of the separator. As such, separators having reduced final oil contents can have increased efficiency. In certain select embodiments are provided separators having a final processing oil content (by weight) less than 20%, for example, between about 14% and 20%, and in some particular embodiments, less than 19%, 18%, 17%, 16%, 15%, 14%, 13%, 12%, 11%, 10%, 9%, 8%, 7%, 6%, or 5%.

The fillers may further reduce what is called the hydration sphere of the electrolyte ions, enhancing their transport across the membrane, thereby once again lowering the overall electrical resistance or ER of the battery, such as an enhanced flooded battery or system.

The filler or fillers may contain various species (e.g., polar species, such as metals) that facilitate the flow of electrolyte and ions across the separator. Such also leads to decreased overall electrical resistance as such a separator is used in a flooded battery, such as an enhanced flooded battery.

The separator contains a performance-enhancing additive in the form of a conductive element or a nucleation additive and/or coating. The conductive element or nucleation additive may preferably be stable in the battery electrolyte, and may further be dispersed within the electrolyte.

Forms of conductive elements and/or coatings contain carbon, such as carbon, conductive carbon, graphite, artificial graphite, activated carbon, carbon paper, acetylene black, carbon black, high surface area carbon black, graphene, high surface area graphene, keitjen black, carbon fibers, carbon filaments, carbon nanotubes, open-cell carbon foam, a carbon mat, carbon felt, carbon Buckminsterfullerene (Bucky Balls), an aqueous carbon suspension, flake graphite, oxidized carbon, and combinations thereof. In addition to these many forms of carbon, the nucleation additive and/or coating may also include or contain barium sulfate ($BaSO_4$) either alone or in combination with carbon. One exemplary form of carbon is PBX®-135, manufactured by Cabot Corporation of Boston, MA, USA. One exemplary preferred form of carbon is PBX®-51 manufactured by Cabot Corporation of Boston, MA, USA. The inventors theorize that the greater the surface area of the carbon, the greater the dynamic charge acceptance in the battery. For example, PBX®-51 has a specific surface area of at least approximately 1,300 $m^2/g$ to approximately 1,500 $m^2/g$, and keitjen black has a surface area of at least approximately 1,250 $m^2/g$.

The nucleation coating may be applied to a finished separator by such means as a slurry coating, slot die coating, spray coating, curtain coating, ink jet printing, screen printing, or by vacuum deposition or chemical vapor deposition ("CVD"). In addition, the additive and/or coating may be provided as carbon paper, either woven or nonwoven, and disposed between and in intimate contact with the separator and electrode(s).

The nucleation additive and/or coating may be within the separator, or on one or both electrode facing surfaces

of the separator. Typically, a coating or layer of the nucleation additive may only be on the negative electrode facing surface. However, it may be on the positive electrode facing surface, or on both surfaces.

In certain embodiments, the nucleation additive may be added to the extrusion mix of base materials and extruded with the separator, or co-extruded as a layer on the separator. When included in the extrusion mix, the nucleation additive may replace some of the silica filler by as much as 5% to 75% by weight. For example, the nucleation additive may be approximately 5%, 10%, 15%, 20%, 25%, 30%, 35%, 40%, 45%, 50%, 55%, 60%, 65%, 70%, or approximately 75% by weight. In other exemplary embodiments, the nucleation additive may be no greater than approximately 75%, 70%, 65%, 60%, 55%, 50%, 45%, 40%, 35%, 30%, 25%, 20%, 15%, 10%, or approximately 5% weight.

Figs. 3A-3C are Scanning Electron Microscope ("SEM") images of graphite 100. Fig. 3D is an SEM image of artificial graphite. Fig. 3E is an SEM image of acetylene black. These images were taken at a 1,000x zoom. As can be seen, the graphite 100 and artificial graphite have similar structures and appear to have a similar surface roughness and surface area on which the lead sulfate may nucleate. However, acetylene black shows a substantially rougher surface and therefore more surface area on which lead sulfate may nucleate, which may provide more nucleation sites.

Figs. 4A-4C are SEM images of a lead electrode after 100 charge/discharge cycles, showing the growth of lead sulfate crystals on the electrode. Figs. 4A and 4B are SEM images were taken at 15.0 kV at 5,000x zoom. Fig. 4A is a control lead electrode that was in the presence of a separator void of any carbon additive and/or coating. Fig. 4B is an image of a lead electrode that was in the presence of a carbon black coated separator. Fig. 4C is an SEM image (taken 15.0 kV at 5,500x zoom) of a lead electrode that was in the presence of an artificial graphite coated separator. As can be seen, the lead sulfate crystals are smaller in size in the presence of carbon as compared to the control.

Figs. 5A-5C are SEM images of a lead acid separator after 100 charge/discharge cycles, showing the growth of lead sulfate crystals on the separator. These SEM images were taken at 15.0kV at 1,000x zoom. Fig. 5A is a control separator without any carbon added. Fig. 5B is a separator with 5% carbon added to the extrusion mix, and Fig. 5C is an image of a separator with 10% carbon added to the extrusion mix. As can be seen, the higher the carbon content, the smaller and fewer the lead sulfate crystals that are created.

Figs. 6A-6C are SEM images of a lead electrode after 100 charge/discharge cycles, showing the growth of lead sulfate crystals on the electrode. These SEM images were taken at 15.0 kV at 10,000x zoom. Fig. 6A is a SEM image of a control lead electrode that was in the presence of a separator void of carbon additive and/or coating. Fig. 6B is a SEM image of a lead electrode that was in the presence of a separator with 5% carbon in the extrusion mix. Fig. 6C is a SEM image of a lead electrode that was in the presence of a separator with 10% carbon in the extrusion mix. As can be seen, the higher the carbon content, the smaller and fewer the lead sulfate crystals that are created.

A conductive layer may be disposed on an exemplary battery separator 100. The conductive layer may preferably be adapted to be in contact with a positive electrode of battery (not shown). The conductive layer may be for providing a new route of current to and from positive electrode (not shown). The conductive layer may be made of any conductive material, including, but not limited to, alumina, lead, gold, antimony, arsenic, zinc, barium, beryllium, lithium, magnesium, nickel, aluminum, silver, tin, and combination alloys thereof, or carbon fibers, graphite, carbon nanotubes, Buckminsterfullerene (or bucky-balls), and combinations thereof. The carbon nanotubes or bucky-balls might be dispersed in a medium with a binder and painted on battery separator. The conductive layer may be made of any conductive material that is more corrosion resistant than the positive electrode conductor, therefore allowing the conductive layer to function as the positive electrode conductor when the conductive capability of the positive electrode conductor deteriorates. The conductive layer may be a lead based alloy with 0.8% to 1.17% tin, and greater than zero (0) to 0.015% silver. The conductive layer may be a lead-based alloy with 0.02% to 0.06% calcium, 0.3% to 3% tin, and 0.01% to 0.05% silver. The conductive layer may be made into any form, including but not limited to, a strip, a screen, a foil, a thread, a wire, a coating, etc., or combinations thereof. The conductive layer may be any thickness, for example, a thickness of approximately 3 $\mu$m. The conductive layer may be disposed upon the battery separator by any means, including, but not limited to, adhesives, hot melting, painting, etc. The conductive layer may be as described in U.S. Patent No. 9,564,623.

The novel separator disclosed herein may contain latex and/or rubber. As used herein, rubber shall describe, rubber, latex, natural rubber, synthetic rubber, cross-linked or uncross-linked rubbers, cured or uncured rubber, crumb or ground rubber, or mixtures thereof. Exemplary natural rubbers may include one or more blends of polyisoprenes, which are commercially available from a variety of suppliers. Exemplary synthetic rubbers include methyl rubber, polybutadiene, chloropene rubbers, butyl rubber, bromobutyl rubber, polyurethane rubber, epichlorhydrin rubber, polysulphide rubber, chlorosulphonyl polyethylene, polynorbornene rubber, acrylate rubber, fluorine rubber and silicone rubber and copolymer rubbers, such as styrene/butadiene rubbers, acrylonitrile/butadiene rubbers, ethylene/propylene rubbers ("EPM" and "EPDM") and ethylene/vinyl acetate rubbers. The rubber may be a cross-linked rubber or an uncross-linked rubber; in certain preferred embodiments, the rubber is uncross-linked rubber. In certain embodiments, the rubber may be a blend of cross-linked and uncross-linked rubber.

In certain embodiments, exemplary separators may contain one or more performance-enhancing additives added to the separator or porous membrane. The performance-enhancing additive may be surfactants, wetting agents, colorants, antistatic additives, an antimony suppressing additive, UV-protection additives, antioxidants, and/or the like,

and combinations thereof. In certain embodiments, the additive surfactants may be ionic, cationic, anionic, or non-ionic surfactants.

In certain embodiments described herein, a reduced amount of anionic or non-ionic surfactant is added to the inventive porous membrane or separator. Because of the lower amount of surfactant, a desirable feature may include lowered total organic carbons ("TOCs") and/or lowered volatile organic compounds ("VOCs").

Certain suitable surfactants are non-ionic while other suitable surfactants are anionic. The additive may be a single surfactant or a mixture of two or more surfactants, for instance two or more anionic surfactants, two or more non-ionic surfactants, or at least one ionic surfactant and at least one non-ionic surfactant. Certain suitable surfactants may have HLB values less than 6, preferably less than 3. The use of these certain suitable surfactants in conjunction with the inventive separators described herein can lead to even further improved separators that, when used in a lead acid battery, lead to reduced water loss, reduced antimony poisoning, improved cycling, reduced float current, reduced float potential, and/or the like, or any combination thereof for that lead acid batteries. Suitable surfactants include surfactants such as salts of alkyl sulfates; alkylarylsulfonate salts; alkylphenol-alkylene oxide addition products; soaps; alkyl-naphthalene-sulfonate salts; one or more sulfo-succinates, such as an anionic sulfo-succinate; dialkyl esters of sulfo-succinate salts; amino compounds (primary, secondary, tertiary amines, or quaternary amines); block copolymers of ethylene oxide and propylene oxide; various polyethylene oxides; and salts of mono and dialkyl phosphate esters. The additive can include a non-ionic surfactant such as polyol fatty acid esters, polyethoxylated esters, polyethoxylated alcohols, alkyl polysaccharides such as alkyl polyglycosides and blends thereof, amine ethoxylates, sorbitan fatty acid ester ethoxylates, organosilicone based surfactants, ethylene vinyl acetate terpolymers, ethoxylated alkyl aryl phosphate esters and sucrose esters of fatty acids.

In certain embodiments, the additive may be represented by a compound of Formula (I)

$$R(OR^1)_n\left(COOM^{x+}_{1/x}\right)_m \qquad (I)$$

in which:

- R is a linear or non-aromatic hydrocarbon radical with 10 to 4200 carbon atoms, preferably 13 to 4200, which may be interrupted by oxygen atoms;
- $R^1 = H, -(CH_2)_kCOOM^{x+}_{1/x}$, or $-(CH_2)_k-SO_3M^{x+}_{1/x}$, preferably H, where k = 1 or 2;
- M is an alkali metal or alkaline-earth metal ion, H' or NH4, where not all the variables M simultaneously have the meaning H';
- n = 0 or 1;
- m = 0 or an integer from 10 to 1400; and
- x = 1 or 2.

The ratio of oxygen atoms to carbon atoms in the compound according to Formula (I) being in the range from 1:1.5 to 1:30 and m and n not being able to simultaneously be 0. However, preferably only one of the variables n and m is different from 0.

By non-aromatic hydrocarbon radicals is meant radicals which contain no aromatic groups or which themselves represent one. The hydrocarbon radicals may be interrupted by oxygen atoms (i.e., contain one or more ether groups).

R is preferably a straight-chain or branched aliphatic hydrocarbon radical which may be interrupted by oxygen atoms. Saturated, uncross-linked hydrocarbon radicals are quite particularly preferred. However, as noted above, R may, in certain embodiments, be aromatic ring-containing.

Through the use of the compounds of Formula (I) for the production of battery separators, they may be effectively protected against oxidative destruction.

Battery separators are preferred which contain a compound according to Formula (I) in which:

- R is a hydrocarbon radical with 10 to 180, preferably 12 to 75 and quite particularly preferably 14 to 40 carbon atoms, which may be interrupted by 1 to 60, preferably 1 to 20 and quite particularly preferably 1 to 8 oxygen atoms, particularly preferably a hydrocarbon radical of formula $R^2$-[$(OC_2H_4)_p(OC_3H_6)_q$]-, in which:

◦ $R^2$ is an alkyl radical with 10 to 30 carbon atoms, preferably 12 to 25, particularly preferably 14 to 20 carbon atoms, wherein $R^2$ can be linear or non-linear such as containing an aromatic ring;

◦ P is an integer from 0 to 30, preferably 0 to 10, particularly preferably 0 to 4; and

◦ q is an integer from 0 to 30, preferably 0 to 10, particularly preferably 0 to 4;

◦ compounds being particularly preferred in which the sum of p and q is 0 to 10, in particular 0 to 4;

- n = 1; and
- m = 0.

Formula $R^2$-$[(OC_2H_4)_p(OC_3H_6)_q]$- is to be understood as also including those compounds in which the sequence of the groups in square brackets differs from that shown. For example according to the invention compounds are suitable in which the radical in brackets is formed by alternating $(OC_2H_4)$ and $(OC_3H_6)$ groups.

Additives in which $R^2$ is a straight-chain or branched alkyl radical with 10 to 20, preferably 14 to 18 carbon atoms have proved to be particularly advantageous. $OC_2H_4$ preferably stands for $OCH_2CH_2$, $OC_3H_6$ for $OCH(CH_3)_2$ and/or $OCH_2CH_2CH_3$.

As preferred additives there may be mentioned in particular alcohols (p = q=0; m = 0) primary alcohols being particularly preferred, fatty alcohol ethoxylates (p = 1 to 4, q = 0), fatty alcohol propoxylates (p = 0; q = 1 to 4) and fatty alcohol alkoxylates (p = 1 to 2; q = 1 to 4) ethoxylates of primary alcohols being preferred. The fatty alcohol alkoxylates are for example accessible through reaction of the corresponding alcohols with ethylene oxide or propylene oxide.

Additives of the type m = 0 which are not, or only difficulty, soluble in water and sulphuric acid have proved to be particularly advantageous.

Also preferred are additives which contain a compound according to Formula (I), in which:

- R is an alkane radical with 20 to 4200, preferably 50 to 750 and quite particularly preferably 80 to 225 carbon atoms;
- M is an alkali metal or alkaline-earth metal ion, H' or NH4, in particular an alkali metal ion such as $Li^+$, $Na^+$ and $K^+$ or H', where not all the variables M simultaneously have the meaning H';
- n=0;
- m is an integer from 10 to 1400; and
- x = 1 or 2.

In certain embodiments, suitable additives may include, in particular, polyacrylic acids, polymethacrylic acids and acrylic acid-methacrylic acid copolymers, whose acid groups are at least partly neutralized, such as by preferably 40%, and particularly preferably by 80%. The percentage refers to the number of acid groups. Quite particularly preferred are poly(meth)acrylic acids which are present entirely in the salt form. Suitable salts include Li, Na, K, Rb, Be, Mg, Ca, Sr, Zn, and ammonium ($NR_4$, wherein R is either hydrogen or a carbon functional group). Poly(meth)acrylic acids may include polyacrylic acids, polymethacrylic acids, and acrylic acid-methacrylic acid copolymers. Poly(meth)acrylic acids are preferred and in particular polyacrylic acids with an average molar mass $M_w$ of 1,000 to 100,000 g/mol, particularly preferably 1,000 to 15,000 g/mol and quite particularly preferably 1,000 to 4,000 g/mol. The molecular weight of the poly(meth)acrylic acid polymers and copolymers is ascertained by measuring the viscosity of a 1% aqueous solution, neutralized with sodium hydroxide solution, of the polymer (Fikentscher's constant).

Also suitable are copolymers of (meth)acrylic acid, in particular copolymers which, besides (meth)acrylic acid contain ethylene, maleic acid, methyl acrylate, ethyl acrylate, butyl acrylate and/or ethylhexyl acrylate as comonomer. Copolymers are preferred which contain at least 40% by weight and preferably at least 80% by weight (meth)acrylic acid monomer; the percentages being based on the acid form of the monomers or polymers.

To neutralize the polyacrylic acid polymers and copolymers, alkali metal and alkaline-earth metal hydroxides such as potassium hydroxide and in particular sodium hydroxide are particularly suitable. In addition, a coating and/or additive to enhance the separator may include, for example, a metal alkoxide, wherein the metal may be, by way of example only (not intended to be limiting), Zn, Na, or Al, by way of example only, sodium ethoxide.

In some embodiments, the porous polyolefin porous membrane may include a coating on one or both sides of such layer. Such a coating may include a surfactant or other material. In some embodiments, the coating may include

one or more materials described, for example, in U.S. Patent No. 9,876,209, which is incorporated by reference herein. Such a coating may, for example, reduce the overcharge voltage of the battery system, thereby extending battery life with less grid corrosion and preventing dry out and/or water loss.

In certain select embodiments, the membrane may be prepared by combining, by weight, about 5-15% polymer, in some instances, about 10% polymer (e.g., polyethylene), about 10-75% filler (e.g., silica), in some instances, about 30% filler, and about 10-85% processing oil, in some instances, about 60% processing oil. In other embodiments, the filler content is reduced, and the oil content is higher, for instance, greater than about 61%, 62%, 63%, 64%, 65%, 66%, 67%, 68%, 69% or 70% by weight. The filler:polymer ratio (by weight) may be about (or may be between about these specific ranges) such as 2:1, 2.5:1, 3:1, 3.5:1, 4.0:1. 4.5:1, 5.0:1, 5.5:1 or 6:1. The filler:polymer ratio (by weight) may be from about 1.5:1 to about 6:1, in some instances, 2:1 to 6:1, from about 2:1 to 5:1, from about 2:1 to 4:1, and in some instances, from about 2:1 to about 3:1. The amounts of the filler, the oil, and polymer are all balanced for runnability and desirable separator properties, such as electrical resistance, basis weight, puncture resistance, bending stiffness, oxidation resistance, porosity, physical strength, tortuosity, and the like.

In accordance with at least one embodiment, the porous membrane can include an UHMWPE mixed with a processing oil and precipitated silica. In accordance with at least one embodiment, the porous membrane can include an UHMWPE mixed with a processing oil, additive and precipitated silica. The mixture may also include minor amounts of other additives or agents as is common in the separator arts (e.g., surfactants, wetting agents, colorants, antistatic additives, antioxidants, and/or the like, and combinations thereof). In certain instances, the porous polymer layer may be a homogeneous mixture of approximately 8 to approximately 100% by volume of polyolefin, approximately 0 to approximately 40% by volume of a plasticizer and approximately 0 to approximately 92% by volume of inert filler material. The preferred plasticizer is petroleum oil. Since the plasticizer is the component which is easiest to remove, by solvent extraction and drying, from the polymer-filler-plasticizer composition, it is useful in imparting porosity to the battery separator.

In certain embodiments, the porous membrane disclosed herein may contain latex and/or rubber, which may be a natural rubber, synthetic rubber, or a mixture thereof. Natural rubbers may include one or more blends of polyisoprenes, which are commercially available from a variety of suppliers. Exemplary synthetic rubbers include methyl rubber, polybutadiene, chloropene rubbers, butyl rubber, bromobutyl rubber, polyurethane rubber, epichlorhydrin rubber, polysulphide rubber, chlorosulphonyl polyethylene, polynorbornene rubber, acrylate rubber, fluorine rubber and silicone rubber and copolymer rubbers, such as styrene/butadiene rubbers, acrylonitrile/butadiene rubbers, ethylene/propylene rubbers (EPM and EPDM) and ethylene/vinyl acetate rubbers. The rubber may be a cross-linked rubber or an uncross-linked rubber; in certain preferred embodiments, the rubber is uncross-linked rubber. In certain embodiments, the rubber may be a blend of cross-linked and uncross-linked rubber. The rubber may be present in the separator in an amount that is at least about 1%, 2%, 3%, 4%, 5%, 6%, 7%, 8%, 9%, or about 10% by weight relative to the final separator weight (the weight of the polyolefin separator sheet or layer containing rubber and/or latex). In certain embodiments, the rubber may be present in an amount from approximately 1-6%, approximately 3-6% by weight, approximately 3% by weight, and approximately 6% by weight. The porous membrane may have a filler to polymer and rubber (filler: polymer and rubber) weight ratio of approximately 2.6:1.0. The amounts of the rubber, filler, oil, and polymer are all balanced for runnability and desirable separator properties, such as electrical resistance, basis weight, puncture resistance, bending stiffness, oxidation resistance, porosity, physical strength, tortuosity, and the like.

A porous membrane made in accordance with the present invention, comprising polyethylene and filler (e.g., silica) typically has a residual oil content; in some embodiments, such residual oil content is from about 0.5% up to about 40% of the total weight of the separator membrane (in some instances, about 10-40% of the total weight of the separator membrane, and in some instances, about 20-40% of that total weight). In certain select embodiments herein, some to all of the residual oil content in the separator may be replaced by the addition of more of a performance-enhancing additive, such as a surfactant, such as a surfactant with a hydrophilic-lipophilic balance ("HLB") less than about 6, or such as a nonionic surfactant. For example, a performance-enhancing additive such as a surfactant, such as a nonionic surfactant, may comprise up to 0.5% all the way up to all of the amount of the residual oil content (e.g., all the way up to 20% or 30% or even 40%) of the total weight of the porous separator membrane, thereby partially or completely replacing the residual oil in the separator membrane.

An exemplary separator may be provided with a web of a porous membrane, such as a microporous membrane having pores less than about 5 μm, preferably less than about 1 μm, a mesoporous membrane, or a macroporous membrane having pores greater than about 1 μm. The porous membrane may preferably have a pore size that is submicron up to 100 μm, and in certain embodiments between about 0.1 μm to about 10 μm. Porosity of the separator membrane described herein may be greater than approximately 50% to approximately 70% in certain embodiments. In certain select embodiments, the porous membrane may be flat or possess ribs that extend from a surface thereof. As shown in Figs. 6A-6C, the separator may be defined by a variety of dimensions, which will be explained in detail hereinafter. For instance, the separator may have a backweb thickness $T_{BACK}$, a total thickness $T_{TOTAL}$, a positive rib height $H_{POS}$, a positive rib base width $W_{POSBASE}$, a positive rib pitch $P_{ROS}$, a negative rib height $H_{NEG}$, a negative rib base width (not

shown), and a negative rib pitch $P_{NEG}$.

With reference now to Figs. 6A-6C, an exemplary separator 100 is provided with a web of a porous membrane 102. The separator 100 and membrane 102 have a machine direction ("MD") and a cross-machine direction ("CMD"), a top edge 101 and a bottom edge 103 (both substantially parallel to the CMD), and lateral side edges 105a, 105b (both substantially parallel to the MD).

With reference to Fig. 7A, the separator 100 is provided with a positive surface, named so because it faces a positive electrode (not shown) when the separator 100 is disposed within a battery (not shown). Fig. 7A depicts the separator's positive surface. One or more sets of primary or positive ribs 104 may be provided and extend from at least a portion of the positive surface of the porous membrane 102. As shown, the ribs 104 are solid and disposed on the membrane 102 substantially longitudinal, which is substantially parallel to the separator MD. The positive ribs 104 are also depicted as extending uniformly across the entire separator width W from lateral edge 105a to lateral edge 105, this is known as a "universal profile." As shown in Fig. 7C, the separator has a width W that may range from, depending upon the type of battery in which the separator 100 will be used, approximately 40 mm to approximately 170 mm in at least selected embodiments.

With reference to Fig. 7B, the separator 100 is provided with a negative surface, named so because it faces a negative electrode (not shown) when the separator 100 is disposed within a battery (not shown). Fig. 7B depicts the separator's negative surface. One or more sets of secondary or negative ribs 106 may be provided and extend from at least a portion of the negative surface of the porous membrane 102. As shown, the ribs 104 are solid and disposed in an orientation that is orthogonal to the positive ribs 104, which substantially parallel to the separator CMD. As such, the ribs may be said to be disposed transversely, laterally, or be referred to as cross ribs, or negative-cross ribs ("NCR" or "NCRs"). The negative ribs 106 however, need not be orthogonal to the positive ribs 104. They may be the same size, larger, smaller, in the same or different pattern, or combinations thereof.

The ribs 104, 106 may be a uniform set, an alternating set, or a mix or combination of solid, discrete broken ribs, continuous, discontinuous, angled, linear, longitudinal ribs extending substantially in a MD of the separator, lateral ribs extending substantially in a cross-machine direction CMD of the separator, transverse ribs extending substantially in a CMD of the separator, cross ribs extending substantially in a cross-machine direction of the separator, serrations or serrated ribs, battlements or battlemented ribs, curved or sinusoidal, disposed in a solid or broken zig-zag-like fashion, grooves, channels, textured areas, embossments, dimples, porous, non-porous, mini ribs or cross-mini ribs, and/or the like, and combinations thereof. Further, the ribs 104, 106 may extend from or into the positive side, the negative side, or both sides.

Referring now to Figs. 8A-8E, several embodiments of ribbed separators with different rib profiles are depicted. It may be preferred that the shown ribs are positive ribs 104. The angled rib pattern of Figs. 8A-8C may be a possibly preferred Daramic® RipTide™ acid mixing rib profile that can help reduce or eliminate acid stratification in certain batteries. In some embodiments, the ribs may be discrete broken ribs with an angular orientation relative to the separator MD. The angular orientation may be an angle between greater than zero degrees (0°) and less than 180 degrees (180°) or greater than 180 degrees (180°) and less than 360 degrees (360°). As further shown in Figs. 8A-8C, the ribs may possess one or more sets of ribs, with each set having varying angular orientations and locations on the separator. The negative face could have no ribs (smooth), the same ribs, smaller ribs, longitudinal mini-ribs, cross mini-ribs or NCRs, diagonal ribs, or combinations thereof.

Fig. 8D depicts a profile of a longitudinal serrated rib pattern. Fig. 8E illustrates a profile of a diagonal offset rib pattern. The negative face could have no ribs (smooth), the same ribs, smaller ribs, longitudinal mini-ribs, cross mini-ribs or NCRs, diagonal ribs, or combinations thereof.

As discussed above, the ribs may extend uniformly across the width of the separator, from lateral edge to lateral edge. This is known as a universal profile. Alternatively, the separator may have side panels adjacent to the lateral edges with minor ribs disposed in the side panel. These minor ribs may be more closely spaced and smaller than the primary ribs. For instance, the minor ribs may be 25% to 50% of the height of the primary ribs. The side panels may alternatively be flat. The side panels may assist in sealing an edge of the separator to another edge of the separator as done when enveloping the separator, which is discussed hereinbelow.

In select exemplary embodiments, at least a portion of the positive ribs may preferably have a height ($H_{POS}$ in Fig. 7C) of approximately 50 μm to approximately 2.0 mm. In some exemplary embodiments, the positive rib height $H_{POS}$ may be approximately 50 μm, 100 μm, 200 μm, 300 μm, 400 μm, 500 μm, 600 μm, 700 μm, 800 μm, 900 μm, 1.0 mm, 1.2 mm, 1.4 mm, 1.6 mm, 1.8 mm, or approximately 2.0 mm. In other exemplary embodiments, the positive rib height $H_{POS}$ may be no greater than approximately 2.0 mm, 1.8 mm, 1.6 mm, 1.4 mm, 1.2 mm, 1.0 mm, 900 μm, 800 μm, 700 μm, 600 μm, 500 μm, 400 μm, 300 μm, 200 μm, 100 μm, or approximately 50 μm.

In certain select embodiments, the positive ribs may preferably have a base width ($W_{POSBASE}$ in Fig. 6C) of approximately 300 μm to approximately 750 μm. In some exemplary embodiments, the positive rib base width may be approximately 300 μm, 400 μm, 500 μm, 600 μm, 700 μm, or approximately 750 μm. In some exemplary embodiments, the positive rib base width may be no greater than approximately 750 μm, 700 μm, 600 μm, 500 μm, 400 μm, or

approximately 300 μm.

Should a portion of the positive ribs be substantially straight and substantially parallel to one another, they may possess a spacing length or pitch ($P_{POS}$ in Fig. 7C) of approximately 50 μm to approximately 20 mm. In some exemplary embodiments, the positive rib pitch may be approximately 50 μm, 100 μm, 200 μm, 300 μm, 400 μm, 500 μm, 600 μm, 700 μm, 800 μm, 900 μm, 1.0 mm, 2.0 mm, 3.0 mm, 4.0 mm, or 5.0 mm, 6.0 mm, 7.0 mm, 8.0 mm, 9.0 mm, or 10.0 mm, 11.0 mm, 12.0 mm, 13.0 mm, 14.0 mm, or 15.0 mm, 16.0 mm, 17.0 mm, 18.0 mm, 19.0 mm, or approximately 20.0 mm.. In other exemplary embodiments, the positive rib pitch may be no greater than approximately 20.0 mm, 19.0 mm, 18.0 mm, 17.0 mm, 16.0 mm, 15.0 mm, 14.0 mm, 13.0 mm, 12.0 mm, 11.0 mm, 10.0 mm, 9.0 mm, 8.0 mm, 7.0 mm, 6.0 mm 5.0 mm, 4.0 mm, 3.0 mm, 2.0 mm, 1.0 mm, 900 μm, 800 μm, 700 μm, 600 μm, 500 μm, 400 μm, 300 μm, 200 μm, 100 μm, or approximately 50 μm.

In select exemplary embodiments, at least a portion of the negative ribs may preferably have a height of approximately 5% to approximately 100% of the height of the positive ribs. In some exemplary embodiments, the negative rib height may be approximately 5%, 10%, 15%, 20%, 25%, 30%, 35%, 40%, 45%, 50%, 55%, 60%, 65%, 70%, 75%, 80%, 95%, or approximately 100% compared to the positive rib height. In other exemplary embodiments, the negative rib height may no greater than approximately 100%, 95%, 90%, 85%, 80%, 75%, 70%, 65%, 60%, 55%, 50%, 45%, 40%, 35%, 30%, 25%, 20%, 15%, 10%, or approximately 5% compared to the positive rib height.

In select exemplary embodiments, at least a portion of the negative ribs may preferably have a height ($H_{NEG}$ in Fig. 7C) of approximately 5 μm to approximately 1.0 mm. In certain embodiments, the negative rib height $H_{NEG}$ may be approximately 5 μm, 10 μm, 25 μm, 50 μm, 100 μm, 200 μm, 300 μm, 400 μm, 500 μm, 600 μm, 700 μm, 800 μm, 900 μm, 1.0 mm, 1.2 mm, 1.4 mm, 1.6 mm, 1.8 mm, or approximately 2.0 mm. In other exemplary embodiments, the positive rib height $H_{NEG}$ may be no greater than approximately 2.0 mm, 1.8 mm, 1.6 mm, 1.4 mm, 1.2 mm, 1.0 mm, 900 μm, 800 μm, 700 μm, 600 μm, 500 μm, 400 μm, 300 μm, 200 μm, 100 μm, or 50 μm., 25 μm, 10 μm, or approximately 5 μm.

In certain exemplary embodiments, at least a portion of the negative ribs may preferably have a base width of approximately 5 μm to approximately 1.0 mm. For instance, the negative base width may be approximately 5 μm, 10 μm, 25 μm, 25 μm, 75 μm, 100 μm, 150 μm, 200 μm, 250 μm, 300 μm, 350 μm, 400 μm, 450 μm, 500 μm, 550 μm, 600 μm, 650 μm, 700 μm, 750 μm, 800 μm, 850 μm, 900 μm, 950 μm, or approximately 1.0 mm. In other embodiments, the negative base width may be no greater than approximately 1.0 mm, 900 μm, 800 μm, 700 μm, 600 μm, 500 μm, 400 μm, 300 μm, 200 μm, 150 μm, 100 μm, 75 μm, 50 μm, 25 μm, 10 μm, or approximately 5 μm.

Should a portion of the negative ribs be substantially straight and substantially parallel to one another, they may possess a spacing length or pitch ($P_{NEG}$ in Fig. 7B) of approximately 50 μm to approximately 20.0 mm. In some exemplary embodiments, the negative rib pitch may be approximately 50 μm, 100 μm, 200 μm, 300 μm, 400 μm, 500 μm, 600 μm, 700 μm, 800 μm, 900 μm, 1.0 mm, 2.0 mm, 3.0 mm, 4.0 mm, or 5.0 mm, 6.0 mm, 7.0 mm, 8.0 mm, 9.0 mm, or 10.0 mm, 11.0 mm, 12.0 mm, 13.0 mm, 14.0 mm, or 15.0 mm, 16.0 mm, 17.0 mm, 18.0 mm, 19.0 mm, or approximately 20.0 mm. In other embodiments, the negative rib pitch may be no greater than approximately 20.0 mm, 19.0 mm, 18.0 mm, 17.0 mm, or 16.0 mm, 15.0 mm, 14.0 mm, 13.0 mm, 12.0 mm, or 11.0 mm, 10.0 mm, 9.0 mm, 8.0 mm, 7.0 mm, or 6.0 mm 5.0 mm, 4.0 mm, 3.0 mm, 2.0 mm, 1.0 mm, 900 μm, 800 μm, 700 μm, 600 μm, 500 μm, 400 μm, 300 μm, 200 μm, 100 μm, or approximately 50 μm.

In some select embodiments, at least a portion of the porous membrane may have negative ribs that are longitudinal or transverse or cross-ribs. The negative ribs may be parallel to the top edge of the separator, or may be disposed at an angle thereto. For instance, the negative ribs may be oriented approximately 0°, 5°, 15°, 25°, 30°, 45°, 60°, 70°, 80°, or 90° relative to the top edge. The cross-ribs may be oriented approximately 0° to approximately 30°, approximately 30° to approximately 45°, approximately 45° to approximately 60°, approximately 30° to approximately 60°, approximately 30° to approximately 90°, or approximately 60° to approximately 90° relative to the top edge.

Certain exemplary embodiments may possess serrations or serrated ribs. If present, they may have an average tip length of from approximately 50 μm to approximately 1.0 mm. For example, the average tip length may be greater than or equal to approximately 50 μm, 100 μm, 200 μm, 300 μm, 400 μm, 500 μm, 600 μm, 700 μm, 800 μm, 900 μm, or approximately 1.0 mm. Alternatively, they may be no greater than or equal to 1.0 mm, 900 μm, 800 μm, 700 μm, 600 μm, 500 μm, 400 μm, 300 μm, 200 μm, 100 μm, or approximately 50 μm.

At least a portion of the serrations or serrated ribs may have an average base length of from approximately 50 μm to approximately 1.0 mm. For example, the average base length may be approximately 50 μm, 100 μm, 200 μm, 300 μm, 400 μm, 500 μm, 600 μm, 700 μm, 800 μm, 900 μm, or 1.0 mm. Alternatively, they may be no greater than or equal to approximately 1.0 mm, 900 μm, 800 μm, 700 μm, 600 μm, 500 μm, 400 μm, 300 μm, 200 μm, 100 μm, or approximately 50 μm.

At least a portion of the serrations or serrated ribs may have an average height of from approximately 50 μm to approximately 1.0 mm. For example, the average height may be approximately 50 μm, 100 μm, 200 μm, 300 μm, 400 μm, 500 μm, 600 μm, 700 μm, 800 μm, 900 μm, or approximately 1.0 mm. Alternatively, they may be no greater than or equal to approximately 1.0 mm, 900 μm, 800 μm, 700 μm, 600 μm, 500 μm, 400 μm, 300 μm, 200 μm, 100

μm, or approximately 50 μm. For embodiments in which the serration height is the same as the rib height, the serrated ribs may also be referred to as protrusions. Such ranges may apply to separators for industrial traction-type start/stop batteries, where the total thickness $T_{TOTAL}$ of the separator may typically be about 1 mm to about 4 mm, as well as automotive start/stop batteries, where the total thickness $T_{TOTAL}$ of the separator may be a little less (e.g., typically about 0.3 mm to about 1mm).

At least a portion of the serrations or serrated ribs may have an average center-to-center pitch within a column in the machine direction of from approximately 100 μm to approximately 50 mm. For example, the average center-to-center pitch may be greater than or equal to approximately 50 μm, 100 μm, 200 μm, 300 μm, 400 μm, 500 μm, 600 μm, 700 μm, 800 μm, 900 μm, or approximately 1.0 mm, and in similar increments up to approximately 50 mm. Alternatively, they may be no greater than or equal to approximately 50 μm, 100 μm, 200 μm, 300 μm, 400 μm, 500 μm, 600 μm, 700 μm, 800 μm, 900 μm, or approximately 1.0 mm, and in similar increments up to 50 mm. In addition, adjacent columns of serrations or serrated ribs may be identically disposed at the same position in a machine direction or offset. In an offset configuration, adjacent serrations or serrated ribs are disposed at different positions in the machine direction.

At least a portion of the serrations or serrated ribs may have an average height to base width ratio of from approximately 0.1:1.0 to approximately 500:1.0. For example, the average height to base width ratio may be approximately 0.1:1.0, 25:1.0, 50:1.0, 100:1.0, 150:1.0, 200:1.0, 250:1.0, 300:1.0, 350:1, 450:1.0, or 500:1.0. Alternatively, the average height to base width ratio may be no greater than or equal to approximately 500:1.0, 450:1.0, 400:1.0, 350:1.0, 300:1.0, 250:1.0, 200:1.0, 150:1.0, 100:1.0, 50:1.0, 25:1.0, or approximately 0.1:1.0.

At least a portion of the serrations or serrated ribs can have average base width to tip width ratio of from approximately 1,000:1.0 to approximately 0.1:1.0. For example, the average base width to tip width ratio may be approximately 0.1:1.0, 1.0:1.0, 2:1.0, 3:1.0, 4:1.0, 5:1.0, 6:1.0, 7:1.0, 8:1.0, 9:1.0, 10:1.0, 15:1.0, 20:1.0, 25:1.0, 50:1.0, 100:1.0, 150:1.0, 200:1.0, 250:1.0, 300:1.0, 350:1.0, 450:1.0, 500:1.0, 550:1.0, 600:1.0, 650:1.0, 700:1.0, 750:1.0, 800:1.0, 850:1.0, 900:1.0, 950:1.0, or approximately 1,000:1.0. Alternatively, the average base width to tip width ratio may be no greater than approximately 1,000:1.0, 950:1.0, 900:1.0, 850:1.0, 800:1.0, 750:1.0, 700:1.0, 650:1.0, 600:1.0, 550:1.0, 500:1.0, 450:1.0, 400:1.0, 350:1.0, 300:1.0, 250:1.0, 200:1.0, 150:1.0, 100:1.0, 50:1.0, 25:1.0, 20:1.0, 15:1.0, 10:1.0, 9:1.0, 8:1.0, 7:1.0, 6:1.0, 5:1.0, 4:1.0, 3:1.0, 2:1.0, 1.0:1.0, or approximately 0.1:1.0.

In some embodiments, the porous separator membrane can have a backweb thickness $T_{BACK}$ from approximately 50 μm to approximately 1.0 mm. for example, the backweb thickness $T_{BACK}$ may be may be approximately 50 μm, 100 μm, 200 μm, 300 μm, 400 μm, 500 μm, 600 μm, 700 μm, 800 μm, 900 μm, or approximately 1.0 mm. In other exemplary embodiments, the backweb thickness $T_{BACK}$ may be no greater than approximately 1.0 mm, 900 μm, 800 μm, 700 μm, 600 μm, 500 μm, 400 μm, 300 μm, 200 μm, 100 μm, or approximately 50 μm. Though in certain embodiments, a very thin flat backweb thickness of 50 μm or thinner is provided, for example, between approximately 10 μm to approximately 50 μm thick.

The separator 100 may be provided as a flat sheet, a leaf or leaves, a wrap, a sleeve, or as an envelope or pocket separator. An exemplary envelope separator may envelope a positive electrode ("positive enveloping separator"), such that the separator has two interior sides facing the positive electrode and two exterior sides facing adjacent negative electrodes. Alternatively, another exemplary envelope separator may envelope a negative electrode ("negative enveloping separator"), such that the separator has two interior sides facing the negative electrode and two exterior sides facing adjacent positive electrodes. In such enveloped separators, the bottom edge 103 may be a folded or a sealed crease edge. Further, the lateral edges 105a, 105b may be continuously or intermittently sealed seam edges. The edges may be bonded or sealed by adhesive, heat, ultrasonic welding, and/or the like, or any combination thereof.

Certain exemplary separators may be processed to form hybrid envelopes. The hybrid envelope may be provided by forming one or more slits or openings before, during or after, folding the separator sheet in half and bonding edges of the separator sheet together so as to form an envelope. The length of the openings may be at least 1/50th, 1/25th, 1/20th, 1/15th, 1/10th, 1/8th, 1/5th, 1/4th, or 1/3rd the length of the entire edge. The length of the openings may be 1/50th to 1/3rd, 1/25th to 1/3rd, 1/20th to 1/3rd, 1/20th to 1/4th, 1/15th to 1/4th, 1/15th to 1/5th or 1/10th to 1/5th the length of the entire edge. The hybrid envelope can have 1-5, 1-4, 2-4, 2-3 or 2 openings, which may or may not be equally disposed along the length of the bottom edge. It is preferred that no opening is in the corner of the envelope. The slits may be cut after the separator has been folded and sealed to give an envelope, or the slits may be formed prior to shaping the porous membrane into the envelope.

Some other exemplary embodiments of separator assembly configurations include: the ribs 104 facing a positive electrode; the ribs 104 facing a negative electrode; a negative or positive electrode envelope; a negative or positive electrode sleeve, a negative or positive electrode hybrid envelope; both electrodes may be enveloped or sleeved, and combinations thereof.

In some embodiments, an exemplary porous membrane may be made by mixing the constituent parts in an extruder. For example, about 30% by weight filler with about 10% by weight UHMWPE, and about 60% processing oil may be mixed in an extruder. The exemplary porous membrane may be made by passing the constituent parts through a heated extruder, passing the extrudate generated by the extruder through a die and into a nip formed by two heated

presses or calender stack or rolls to form a continuous web. A substantial amount of the processing oil from the web may be extracted by use of a solvent, thereby followed with removing the solvent by drying. The web may then be cut into lanes of predetermined width, and then wound onto rolls. Additionally, the presses or calender rolls may be engraved with various groove patterns to impart ribs, grooves, textured areas, embossments, and/or the like as substantially described herein.

In some embodiments, an exemplary porous membrane may be made by mixing the constituent parts in an extruder. For example, approximately 5-15% by weight polymer (e.g., polyethylene), approximately 10-75% by weight filler (e.g., silica), approximately 5-25% by weight of a nucleation additive, and approximately 10-85% processing oil may be mixed in an extruder. The exemplary porous membrane may be made by passing the constituent parts through a heated extruder, passing the extrudate generated by the extruder through a die and into a nip formed by two heated presses or calender stack or rolls to form a continuous web. A substantial amount of the processing oil from the web may be extracted by use of a solvent. The web may then be dried and slit into lanes of predetermined width, and then wound onto rolls. Additionally, the presses or calender rolls may be engraved with various groove patterns to impart ribs, grooves, textured areas, embossments, and/or the like as substantially described herein. The amounts of the rubber, filler, oil, and polymer are all balanced for runnability and desirable separator properties, such as electrical resistance, basis weight, puncture resistance, bending stiffness, oxidation resistance, porosity, physical strength, pore tortuosity, and the like.

In certain embodiments, performance-enhancing additives or agents (e.g., nucleation additives, surfactants, wetting agents, colorants, antistatic additives, antioxidants, and/or the like, and combinations thereof) may be mixed together with the other constituent parts within the extruder. A porous membrane according to the present disclosure may then be extruded into the shape of a sheet or web, and finished in substantially the same way as described above.

In select embodiments, and in addition or alternative to adding into the extruder, the additive or additives may, for example, be co-extruded with the separator as a distinct layer of the separator.

In certain embodiments, and in addition or alternative to adding into the extruder, the additive or additives may, for example, be applied to the separator porous membrane when it is finished (e.g., after extracting a bulk of the processing oil). According to certain preferred embodiments, the additive or a solution (e.g., an aqueous solution, slurry, etc.) of the additive is applied to one or more surfaces of the separator. This variant is suitable in particular for the application of non-thermostable additives and additives which are soluble in the solvent used for the extraction of processing oil. Particularly suitable as solvents for the additives according to the invention are low-molecular-weight alcohols, such as methanol and ethanol, as well as mixtures of these alcohols with water. The application can take place on the side facing the negative electrode, the side facing the positive electrode, or on both sides of the separator. The application may also take place during the extraction of the pore forming agent (e.g., the processing oil) while in a solvent bath. In certain select embodiments, some portion of a performance-enhancing additive, such as a surfactant coating or a performance-enhancing additive added to the extruder before the separator is made (or both) may combine with the antimony in the battery system and may inactivate it and/or form a compound with it and/or cause it to drop down into the mud rest of the battery and/or prevent it from depositing onto the negative electrode. The surfactant or additive may also be added to the electrolyte, the glass mat, the battery case, pasting paper, pasting mat, and/or the like, or combinations thereof.

In certain embodiments, the additive (e.g., a non-ionic surfactant, an anionic surfactant, or mixtures thereof) may be present at a density or add-on level of at least approximately 0.5 g/m$^2$, 1.0 g/m$^2$, 1.5 g/m$^2$, 2.0 g/m$^2$, 2.5 g/m$^2$, 3.0 g/m$^2$, 3.5 g/m$^2$, 4.0 g/m$^2$, 4.5 g/m$^2$, 5.0 g/m$^2$, 5.5 g/m$^2$, 6.0 g/m$^2$, 6.5 g/m$^2$, 7.0 g/m$^2$, 7.5 g/m$^2$, 8.0 g/m$^2$, 8.5 g/m$^2$, 9.0 g/m$^2$, 9.5 g/m$^2$ or 10.0 g/m$^2$ or even up to about approximately 25.0 g/m$^2$. The additive may be present on the separator at a density or add-on level between approximately 0.5-15 g/m$^2$, 0.5-10 g/m$^2$, 1.0-10.0 g/m$^2$, 1.5-10.0 g/m$^2$, 2.0-10.0 g/m$^2$, 2.5-10.0 g/m$^2$, 3.0-10.0 g/m$^2$, 3.5-10.0 g/m$^2$, 4.0-10.0 g/m$^2$, 4.5-10.0 g/m$^2$, 5.0-10.0 g/m$^2$, 5.5-10.0 g/m$^2$, 6.0-10.0 g/m$^2$, 6.5-10.0 g/m$^2$, 7.0-10.0 g/m$^2$, 7.5-10.0 g/m$^2$, 4.5-7.5 g/m$^2$, 5.0-10.5 g/m$^2$, 5.0-11.0 g/m$^2$, 5.0-12.0 g/m$^2$, 5.0-15.0 g/m$^2$, 5.0-16.0 g/m$^2$, 5.0-17.0 g/m$^2$, 5.0-18.0 g/m$^2$, 5.0-19.0 g/m$^2$, 5.0-20.0 g/m$^2$, 5.0-21.0 g/m$^2$, 5.0-22.0 g/m$^2$, 5.0-23.0 g/m$^2$, 5.0-24.0 g/m$^2$, or approximately 5.0-25.0 g/m$^2$.

The application may also take place by dipping the battery separator in the additive or a solution of the additive (solvent bath addition) and removing the solvent if necessary (e.g., by drying). In this way the application of the additive may be combined, for example, with the extraction often applied during membrane production. Other preferred methods are to spray the surface with additive, dip coat, roller coat, or curtain coat the one or more additives on the surface of separator.

The additives may also be impregnated into the separator after or before extraction of the processing oil.

In certain embodiments described herein, a reduced amount of ionic, cationic, anionic, and/or non-ionic surfactant is added to the inventive separator. In such instances, a desirable feature may include lowered total organic carbons and/or lowered volatile organic compounds (because of the lower amount of surfactant) may produce a desirable inventive separator according to such embodiment.

In some embodiments, an exemplary porous membrane may be made by mixing the constituent parts in an extruder. For example, about 5-15% by weight polymer (e.g., polyethylene), about 10-75% by weight filler (e.g., silica),

about 1-50% by weight rubber and/or latex, and about 10-85% processing oil may be mixed in an extruder. The exemplary porous membrane may be made by passing the constituent parts through a heated extruder, passing the extrudate generated by the extruder through a die and into a nip formed by two heated presses or calender stack or rolls to form a continuous web. A substantial amount of the processing oil from the web may be extracted by use of a solvent. The web may then be dried and slit into lanes of predetermined width, and then wound onto rolls. Additionally, the presses or calender rolls may be engraved with various groove patterns to impart ribs, grooves, textured areas, embossments, and/or the like as substantially described herein. The amounts of the rubber, filler, oil, and polymer are all balanced for runnability and desirable separator properties, such as electrical resistance, basis weight, puncture resistance, bending stiffness, oxidation resistance, porosity, physical strength, tortuosity, and the like.

In addition to being added to the constituent parts of the extruder, certain embodiments combine the rubber to the porous membrane after extrusion. For example, the rubber may be coated onto one or both sides, preferably on the side facing the negative electrode, with a liquid slurry comprising the rubber and/or latex, optionally, silica, and water, and then dried such that a film of this material is formed upon the surface of an exemplary porous membrane. For better wettability of this layer, known wetting agents may be added to the slurry for use in lead acid batteries.

In certain embodiments, the slurry can also contain one or more performance-enhancing additives as described herein. After drying, a porous layer and/or film forms on the surface of the separator, which adheres very well to the porous membrane and increases electrical resistance only insignificantly, if at all. After the rubber is added, it may be further compressed using either a machine press or calender stack or roll. Other possible methods to apply the rubber and/or latex are to apply a rubber and/or latex slurry by dip coat, roller coat, spray coat, or curtain coat one or more surfaces of the separator, or any combination thereof. These processes may occur before or after the processing oil has been extracted, or before or after it is slit into lanes.

A further embodiment of the present invention involves depositing rubber onto the membrane by impregnation and drying.

In certain embodiments, exemplary separators according to the present disclosure may be combined with another layer (laminated or otherwise), such as a fibrous layer or fibrous mat having enhanced wicking properties and/or enhanced wetting or holding of electrolyte properties. The fibrous mat may be woven, nonwoven, fleeces, mesh, net, single layered, multi-layered (where each layer may have the same, similar or different characteristics than the other layers), composed of glass fibers, or synthetic fibers, fleeces or fabrics made from synthetic fibers or mixtures with glass and synthetic fibers or paper, or any combination thereof. The fibrous layer or fibrous mat may also contain a nucleation additive.

In certain embodiments, the fibrous mat (laminated or otherwise) may be used as a carrier for additional materials. The addition material may include, for example, rubber and/or latex, optionally silica, water, and/or one or more performance-enhancing additive, such as various additives described herein, including a nucleation additive as described herein, or any combination thereof. By way of example, the additional material may be delivered in the form of a slurry that may then be coated onto one or more surfaces of the fibrous mat to form a film, or soaked and impregnated into the fibrous mat.

When the fibrous layer is present, it is preferred that the porous membrane has a larger surface area than the fibrous layers. Thus, when combining the porous membrane and the fibrous layers, the fibrous layers do not completely cover the porous layer. It is preferred that at least two opposing edge regions of the membrane layer remain uncovered to provide edges for heat sealing which facilitates the optional formation of pockets or envelopes and/or the like. Such a fibrous mat may have a thickness that is at least 100 μm, in some embodiments, at least about 200 μm, at least about 250 μm, at least about 300 μm, at least about 400 μm, at least about 500 μm, at least about 600 μm, at least about 700 μm, at least about 800 μm, at least about 900 μm, at least about 1 mm, at least about 2 mm, and so forth. The subsequent laminated separator may be cut into pieces. In certain embodiments, the fibrous mat is laminated to a ribbed surface of the porous membrane porous membrane. In certain embodiments, handling and/or assembly advantages are provided to the battery maker with the improved separator described herein, as it may be supplied in roll form and/or cut piece form. And as mentioned previously, the improved separator may be a standalone separator sheet or layer without the addition of one or more fibrous mats or the like.

If the fibrous mat is laminated to the porous membrane, they may be bonded together by adhesive, heat, ultrasonic welding, compression, and/or the like, or any combination thereof. And, the fibrous mat may be a PAM or NAM retention mat.

## Example

For measuring the charge acceptance, battery cells were discharged for 20 hours and then charged. During charging the dynamic charge acceptance (A/Ah) was measured at the $1^{st}$ second of charging and at the $60^{th}$ second of charging and at multiple states of charge (%).

Each cell tested was a 2.5 Ah AMCO cell with a Pb grid containing 2.5% antimony (Sb). The Control cell used

a typical commercially available separator without incorporating a carbon. The Acetylene Black cell used a substantially similar separator as the Control cell with the exception of having a separator incorporating an acetylene black coating of approximately 10 μm thick and a coating weight distribution of approximately 0.35 mg/cm$^2$. The acetylene black coating had approximately 1% by weight to approximately 5% by weight of an acrylic binder.

The above values are used for exemplary purposes only. The coating thickness may be, for example, approximately 5 μm to approximately 60 μm thick. The coating weight distribution may be, for example, approximately 0.1 mg/cm$^2$ to approximately 0.5 mg/cm$^2$. In addition, the coating may have an acrylic binder of, for example, approximately 0.5% by weight to approximately 15% by weight.

The values measured during this test at 1 second are memorialized in Table 1 and Fig. 9A. The values measured during this test at 60 seconds are memorialized in Table 2 and Fig. 9B. As can be seen, the cell utilizing the acetylene black coated separator exhibited a substantially better charge acceptance as compared to the control cell that utilized the commercially available separator without an incorporated carbon. The Specification is a theoretical possibly desired battery performance in accordance with at least one embodiment.

Table 2

| Dynamic Charge Acceptance (A/Ah) at 1 second | | | | |
|---|---|---|---|---|
| State of Charge | Charge Amps (A) | Specification (A/Ah) | Control (A/Ah) | Acetylene Black (A/Ah) |
| 90% | 1.25 | 0.50 | 1.50 | 2.13 |
| 80% | 2.50 | 1.00 | 1.48 | 1.99 |
| 70% | 3.75 | 1.50 | 1.45 | 1.95 |
| 60% | 5.00 | 2.00 | 1.46 | 1.97 |

Table 3

| Dynamic Charge Acceptance (A/Ah) at 60 seconds | | | | |
|---|---|---|---|---|
| State of Charge | Charge Amps (A) | Specification (A/Ah) | Control (A/Ah) | Acetylene Black (A/Ah) |
| 90% | 1.00 | 0.40 | 0.63 | 0.67 |
| 80% | 1.50 | 0.60 | 0.60 | 0.70 |
| 70% | 2.00 | 0.80 | 0.67 | 0.77 |
| 60% | 2.50 | 1.00 | 0.59 | 0.81 |

Example NH profile (18 positive ribs, no negative ribs):

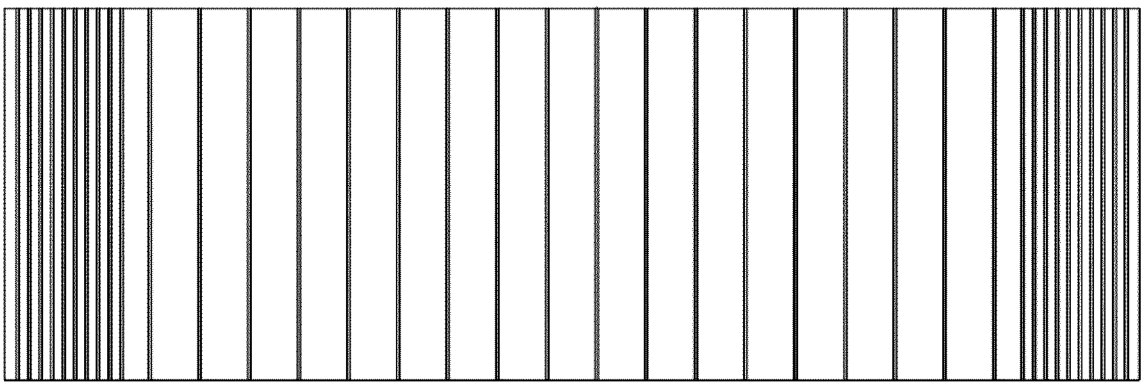

The preferred profiles may also include negative side ribs (such as longitudinal or transverse negative mini ribs), may have acid mixing positive ribs (such as RipTide or serrated ribs), and/or combinations thereof.

Selected embodiments of the present invention are provided with a lead acid battery separator having a porous membrane and a nucleation additive. The porous membrane may be selected from polyolefin, polyethylene, polypropylene, rubber, polyvinyl chloride, phenolic resins, cellulosic, synthetic wood pulp, glass fibers, synthetic fibers, natural rubbers, synthetic rubbers, latex, bisphenol formaldehyde, and combinations thereof. Should the separator be polyethylene, it may be ultra-high molecular weight polyethylene (UHMWPE).

The nucleation additive may be conductive. The nucleation additive may further be a form of carbon and/or barium sulfate. The carbon may be in the form of conductive carbon, graphite, artificial graphite, activated carbon, carbon paper, acetylene black, carbon black, high surface area carbon black, graphene, high surface area graphene, keitjen black, carbon fibers, carbon filaments, carbon nanotubes, open-cell carbon foam, carbon Buckminsterfullerene, an aqueous carbon suspension, and combinations thereof. The nucleation additive may be within the porous membrane, and/or on one or more surfaces of the porous membrane.

The nucleation additive may be applied to the porous membrane by many methods, such as by any of the following methods: roller coating, chemical vapor deposition, co-extrusion, a controlled burn to char said surface, a controlled burn to char said surface via plasma exposure, a controlled burn to char said surface via UV exposure, toner printing, ink-jet printing, flexography printing, lithography printing, slurry coating, spraying an aqueous carbon suspension, impregnation, and combinations thereof.

In select embodiments, the lead acid battery separator may be an AGM separator.

In other exemplary embodiments, the porous membrane may contain a particle-like filler, and a processing plasticizer. Carbon may further be on a surface of the separator with an amount of the particle-like filler. The particle-like filler may be any one of the following: dry finely divided silica, precipitated silica, amorphous silica, alumina, talc, or combinations thereof.

In certain embodiments, the processing plasticizer may be any one of the following: processing oil, paraffin-based mineral oil, mineral oil, or combinations thereof.

In select embodiments, the porous membrane may be provided with a performance-enhancing additive, which may be any of the following: a non-ionic surfactant, an ionic surfactant, an anionic surfactant, wetting agents, colorants, antistatic additives, UV-protection additives, antioxidants, or combinations thereof.

The porous membrane is provided with any one of the following: solid ribs, discrete broken ribs, continuous ribs, discontinuous ribs, angled ribs, linear ribs, longitudinal ribs extending substantially in a machine direction of said porous membrane, lateral ribs extending substantially in a cross-machine direction of said porous membrane, transverse ribs extending substantially in said cross-machine direction of the separator, serrations or serrated ribs, battlements or battlemented ribs, curved or sinusoidal ribs, disposed in a solid or broken zig-zag-like fashion, grooves, channels, textured areas, embossments, dimples, porous, non-porous, mini ribs, cross-mini ribs, and combinations thereof.

Also disclosed herein is a novel or improved lead acid battery having an electrolyte, a positive electrode, a negative electrode, and a separator disposed therebetween, and a nucleation additive. The nucleation additive may preferable be stable in the electrolyte, and may be dispersed within the electrolyte. The nucleation additive may be at least semi-conductive. The separator may be provided with the nucleation additive. In addition, the nucleation additive may be any one of the following: carbon, conductive carbon, graphite, artificial graphite, activated carbon, carbon paper, acetylene black, carbon black, high surface area carbon black, graphene, high surface area graphene, keitjen black, carbon fibers, carbon filaments, carbon nanotubes, open-cell carbon foam, carbon Buckminsterfullerene, an aqueous carbon suspension, barium sulfate, and combinations thereof.

The nucleation additive may be on a surface of the separator(s) and may be adjacent to the negative electrode. Furthermore, the nucleation additive may be within the separator.

The nucleation additive may be applied to a surface of the separator by any of the following: roller coating, chemical vapor deposition, co-extrusion, a controlled burn to char said surface, a controlled burn to char said surface via plasma exposure, a controlled burn to char said surface via UV exposure, toner printing, ink-jet printing, flexography printing, lithography printing, slurry coating, spraying an aqueous carbon suspension, and combinations thereof. In addition, the nucleation additive may be incorporated into any of the following: a pasting paper, a scrim, and combinations thereof.

In some exemplary embodiments, the separator may be any of the following: polyolefin, UHMWPE, polyethylene, polypropylene, rubber, polyvinyl chloride, phenolic resins, cellulosic, synthetic wood pulp, glass fibers, synthetic fibers, natural rubbers, synthetic rubbers, latex, bisphenol formaldehyde, and combinations thereof. Other separator may be AGM separators.

The lead acid battery may be any of the following: a flat-plate battery, a flooded lead acid battery, an enhanced flooded lead acid battery, a deep-cycle battery, an absorptive glass mat battery, a tubular battery, an inverter battery, a vehicle battery, a SLI battery, an ISS battery, an automobile battery, a truck battery, a motorcycle battery, an all-terrain vehicle battery, a forklift battery, a golf cart battery, a hybrid-electric vehicle battery, an electric vehicle battery, an e-rickshaw battery, an e-trike battery, and an e-bike battery. The battery may operate in a partial state of charge, and while in motion or stationary.

In another exemplary embodiment of the present invention, a vehicle may be provided as set out in the claims. Also disclosed is a vehicle that may be provided with a battery, a separator, and a nucleation additive. In some embodiments, the separator may be provided with the nucleation additive, either within or on a surface of the separator. In addition, the nucleation additive may be any one of the following: carbon, conductive carbon, graphite, artificial graphite, activated carbon, carbon paper, acetylene black, carbon black, high surface area carbon black, graphene, high surface area graphene, keitjen black, carbon fibers, carbon filaments, carbon nanotubes, open-cell carbon foam, carbon Buckminsterfullerene, an aqueous carbon suspension, barium sulfate, and combinations thereof.

The nucleation additive may be applied to a surface of the separator by any of the following: roller coating, chemical vapor deposition, co-extrusion, a controlled burn to char said surface, a controlled burn to char said surface via plasma exposure, a controlled burn to char said surface via UV exposure, toner printing, ink-jet printing, flexography printing, lithography printing, slurry coating, spraying an aqueous carbon suspension, and combinations thereof. In addition, the nucleation additive may be incorporated into any of the following: a pasting paper, a scrim, and combinations thereof.

In select embodiments, the battery may operate in a partial state of charge. In other embodiments, the vehicle may be any of the following: an automobile, a truck, a motorcycle, an all-terrain vehicle, a forklift, a golf cart, a hybrid-electric vehicle, an electric vehicle, an e-rickshaw, an e-trike, and an e-bike.

In accordance with at least select embodiments, aspects or objects, disclosed herein or provided are novel or improved separators, battery separators, enhanced flooded battery separators, batteries, cells, and/or methods of manufacture and/or use of such separators, battery separators, enhanced flooded battery separators, cells, and/or batteries. In accordance with at least certain embodiments, the present disclosure or invention is directed to novel or improved battery separators for enhanced flooded batteries. In addition, there is disclosed herein methods, systems, and battery separators having a reduced ER, improved puncture strength, improved separator CMD stiffness, improved oxidation resistance, reduced separator thickness, reduced basis weight, and combinations thereof. In accordance with at least particular embodiments, the present disclosure or invention is directed to an improved separator for enhanced flooded batteries wherein the separator has a reduced ER, improved puncture strength, improved separator CMD stiffness, improved oxidation resistance, reduced separator thickness, reduced basis weight, or any combination thereof. In accordance with at least certain embodiments, separators are provided that include or exhibit a reduced ER, improved puncture strength, improved separator CMD stiffness, improved oxidation resistance, reduced separator thickness, reduced basis weight, and combinations thereof. In accordance with at least certain embodiments, separators are provided in battery applications for flat-plate batteries, tubular batteries, vehicle SLI, and HEV ISS applications, deep cycle applications, golf car or golf cart and e-rickshaw batteries, batteries operating in a partial state of charge ("PSOC"), inverter batteries; and storage batteries for renewable energy sources, and combinations thereof.

In accordance with at least select embodiments, the present disclosure or invention may address the above issues or needs. In accordance with at least certain objects, aspects, or embodiments, the present disclosure or invention may provide an improved separator and/or battery which overcomes the aforementioned problems, for instance by providing batteries mitigating the formation of dendrites, having improved charge acceptance, and/or having improved cycling performance.

Disclosed herein are improved separators for lead acid batteries, lead acid batteries, systems, vehicles, and/or methods and/or uses for the same. The separators may include a porous membrane and a nucleation additive. In accordance with at least select embodiments, the present disclosure or invention may address current issues or needs, and/or may provide an improved separator and/or battery which overcomes the current issues or problems, for instance, by providing batteries mitigating the formation of dendrites, having improved charge acceptance, and/or having improved cycling performance.

In accordance with at least selected embodiments, aspects or objects, the present disclosure or invention may be directed to and/or may provide:

1. A compression resistant separator profile may reduce the crystal size in addition to the nucleation additives.
2. Cycle life and end of discharge voltage may be improved:

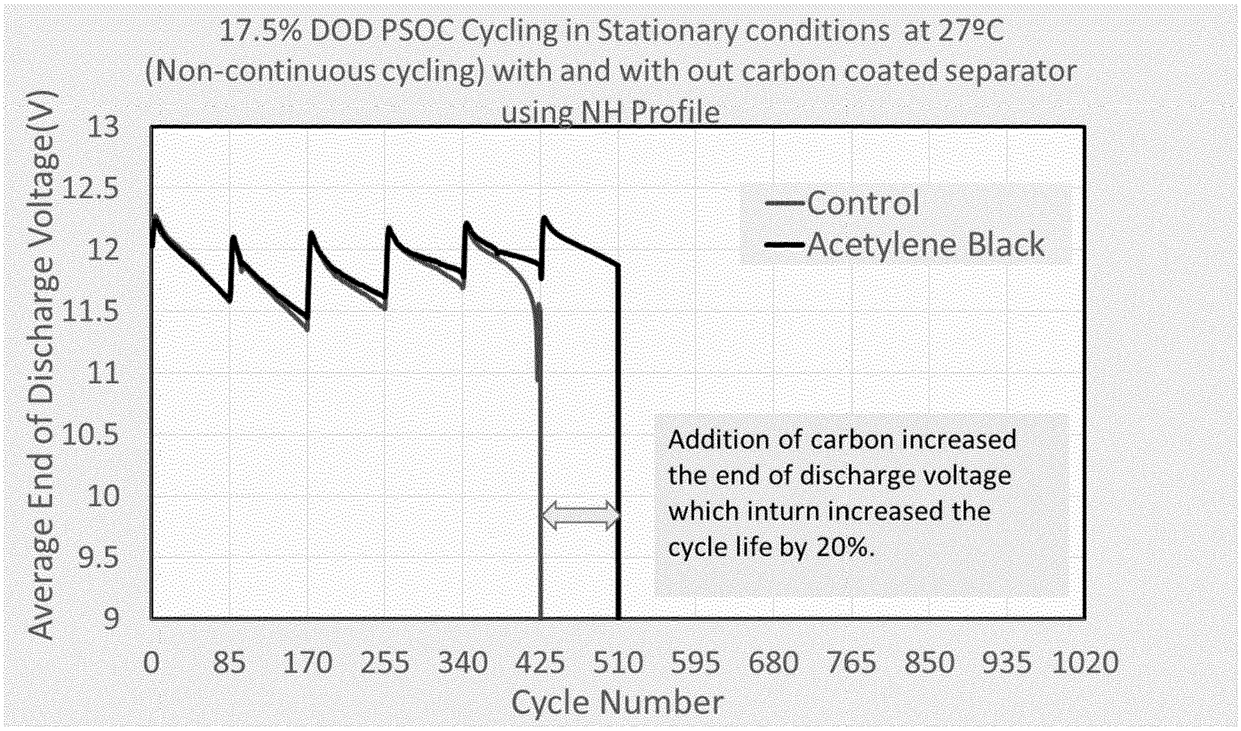


3. The carbon additive can be used in applications where superior dynamic charge acceptance is the primary performance requirement. The carbon additive can meet the needs of valve regulated lead acid batteries for fuel efficient start-stop vehicles and in grid storage applications.

4. The carbon additive can:

♦ Reduce negative plate sulfation + Enable superior dynamic charge acceptance, meeting the demands of multiple charge / discharge cycles ♦ Deliver high life cycle at partial state-of-charge conditions, helping to ensure longer battery life.

5. Possible battery applications

♦ Micro-hybrid vehicles ♦ Mild-hybrid vehicles ♦ Motive ♦ Energy storage systems (ESS) ♦ E-bikes

6. In one example, the possibly preferred carbon additive has:

| PROPERTY | VALUES | TEST METHOD |
|---|---|---|
| BET Nitrogen surface area ($m_2$/g) | 1300 - 1550 | ASTM D6556 |
| Oil Adsorption Number (OAN) (ml/100g) | 140 - 200 | ASTM D2414 |
| Iron (ppm) | <50 | CTM* |
| Total Co, Cr, Cu, Fe, Mn, Ni (ppm) | <60 | CTM* |

## Claims

1. A lead acid battery separator comprising:

a porous membrane comprising one or more polymers selected from the group consisting of: polyolefin, polyethylene, polypropylene, rubber, polyvinyl chloride, phenolic resins, cellulosic, synthetic wood pulp, glass fibers, synthetic fibers, natural rubbers, synthetic rubbers, latex, bisphenol formaldehyde, and combinations thereof and one or more conductive carbon components selected from the group consisting of graphite, artificial graphite,

activated carbon, carbon paper, acetylene black, carbon black, high surface area carbon black, graphene, high surface area graphene, keitjen black, carbon fibers, carbon filaments, carbon nanotubes, open-cell carbon foam, a carbon mat, carbon felt, carbon Buckminsterfullerene ("Bucky Balls"), an aqueous carbon suspension, flake graphite, oxidized carbon, and combinations thereof within and not on the separator and barium sulfate within and not on the separator; and

wherein said porous membrane comprises one from the group consisting of: solid ribs, discrete broken ribs, continuous ribs, discontinuous ribs, discontinuous peaks, discontinuous protrusions, angled ribs, linear ribs, longitudinal ribs extending substantially in a machine direction of said porous membrane, lateral ribs extending substantially in a cross-machine direction of said porous membrane, transverse ribs extending substantially in said cross-machine direction of the separator, discrete teeth, toothed ribs, serrations, serrated ribs, battlements, battlemented ribs, curved ribs, sinusoidal ribs, disposed in a continuous zig-zag-sawtooth-like fashion, disposed in a broken discontinuous zig-zag-sawtooth-like fashion, grooves, channels, textured areas, embossments, dimples, columns, mini columns, porous, non-porous, mini ribs, cross-mini ribs, and combinations thereof.

**2.** The lead acid battery separator of claim 1, wherein said polyethylene is an ultra-high molecular weight polyethylene.

**3.** The lead acid battery separator of claim 1, wherein said porous membrane has a porosity of at least 50%.

**4.** The lead acid battery separator of claim 1, wherein said conductive carbon component has a specific surface area of at least 1,250 $m^2/g$ to 1,750 $m^2/g$.

**5.** The lead acid battery separator of claim 1, wherein said conductive carbon component has a specific surface area of at least 1,750 $m^2/g$.

**6.** The lead acid battery separator of claim 1, wherein said porous membrane is an absorptive glass mat separator or is adjacent to an absorptive glass mat separator.

**7.** The lead acid battery separator of claim 1, wherein said porous membrane further comprises a particle-like filler.

**8.** The lead acid battery separator of claim 7, wherein said particle-like filler is selected from the group consisting of: dry finely divided silica, precipitated silica, amorphous silica, alumina, talc, and combinations thereof.

**9.** The lead acid battery separator of claim 1, further comprising a performance-enhancing additive selected from the group consisting of: a surfactant, wetting agents, colorants, antistatic additives, UV-protection additives, antioxidants, and combinations thereof.

**10.** A lead acid battery comprising:

an electrolyte
a positive electrode, a negative electrode, and a separator disposed therebetween, the separator according to claim 1.

**11.** A vehicle comprising: the lead acid battery according to claim 10.

**12.** A lead acid battery separator comprising:

a porous membrane comprising one or more polymers selected from the group consisting of: polyolefin, polyethylene, polypropylene, rubber, polyvinyl chloride, phenolic resins, cellulosic, synthetic wood pulp, glass fibers, synthetic fibers, natural rubbers, synthetic rubbers, latex, bisphenol formaldehyde, and combinations thereof and one or more conductive carbon components selected from the group consisting of graphite, artificial graphite, activated carbon, carbon paper, acetylene black, carbon black, high surface area carbon black, graphene, high surface area graphene, keitjen black, carbon fibers, carbon filaments, carbon nanotubes, open-cell carbon foam, a carbon mat, carbon felt, carbon Buckminsterfullerene ("Bucky Balls"), an aqueous carbon suspension, flake graphite, oxidized carbon, and combinations thereof within and not on the separator and particle-like filler selected from the group consisting of: dry finely divided silica, precipitated silica, amorphous silica, alumina, talc, and combinations thereof within and not on the separator; and

wherein said porous membrane comprises one from the group consisting of: solid ribs, discrete broken ribs, continuous ribs, discontinuous ribs, discontinuous peaks, discontinuous protrusions, angled ribs, linear ribs,

longitudinal ribs extending substantially in a machine direction of said porous membrane, lateral ribs extending substantially in a cross-machine direction of said porous membrane, transverse ribs extending substantially in said cross-machine direction of the separator, discrete teeth, toothed ribs, serrations, serrated ribs, battlements, battlemented ribs, curved ribs, sinusoidal ribs, disposed in a continuous zig-zag-sawtooth-like fashion, disposed in a broken discontinuous zig-zag-sawtooth-like fashion, grooves, channels, textured areas, embossments, dimples, columns, mini columns, porous, non-porous, mini ribs, cross mini ribs, and combinations thereof.

**Patentansprüche**

1. Ein Blei-Säure Batterie-Separator, der Folgendes aufweist:

   eine poröse Membran, die ein oder mehrere Polymere aufweist, die aus der folgenden Gruppe ausgewählt sind bestehend aus: Polyolefin, Polyethen, Polypropylen, Gummi, Polyvinylchlorid, Phenolharzen, Zellulose, synthetischer Holzpulpe, Glasfasern, synthetischen Fasern, natürlichen Gummis, synthetischen Gummis, Latex, Bisphenol-Formaldehyd und Kombinationen davon, und die eine oder mehrere leitfähige Kohlenstoffkomponenten aufweist, die aus der folgenden Gruppe ausgewählt sind bestehend aus: Graphit, künstlichem Graphit, Aktivkohle, Kohlepapier, Acetylenruß, Kohlenstoffruß, Kohlenstoffruß mit großer Oberfläche, Graphen, Graphen mit großer Oberfläche, Keitjenruß, Kohlenstofffasern, Kohlenstofffilamente, Kohlenstoffnanoröhren, offenzelligem Kohlenstoffschaum, eine Kohlenstoffmatte, Kohlenstofffilz, Kohlenstoff-Buckminsterfulleren ("Bucky Balls"), eine wässrige Kohlenstoffsuspension, Flockengraphit, oxidierter Kohlenstoff und Kombinationen davon innerhalb und nicht auf dem Separator und die Bariumsulfat innerhalb und nicht auf dem Separator aufweist; und wobei die poröse Membran eines aus der Gruppe aufweist, die aus Folgendem besteht:
   feste Rippen, diskrete gebrochene Rippen, kontinuierliche Rippen, diskontinuierliche Rippen, diskontinuierliche Spitzen, diskontinuierliche Vorsprünge, abgewinkelte Rippen, lineare Rippen, Längsrippen, die sich im Wesentlichen in einer Maschinenrichtung der porösen Membran erstrecken, Lateralrippen, die sich im Wesentlichen in einer Quermaschinenrichtung der porösen Membran erstrecken, Transversalrippen, die sich im Wesentlichen in der Quermaschinenrichtung des Separators erstrecken, diskrete Zähne, gezahnte Rippen, Zacken, gezackte Rippen, Zinnen, zinnenartige Rippen, gekrümmte Rippen, sinusförmige Rippen, die in einer kontinuierlichen zick-zack-sägezahnartigen Weise angeordnet sind, die in einer unterbrochenen nicht kontinuierlichen zick-zack-sägezahnartigen Weise angeordnet sind, Rillen, Kanäle, strukturierte Bereiche, Prägungen, Vertiefungen, Säulen, Minisäulen, poröse, nicht-poröse, Minirippen, Kreuzminirippen und Kombinationen davon.

2. Der Blei-Säure Batterie-Separator nach Anspruch 1, wobei das Polyethen ein Polyethen mit ultrahohem Molekulargewicht ist.

3. Der Blei-Säure Batterie-Separator nach Anspruch 1, wobei die poröse Membran eine Porosität von mindestens 50% hat.

4. Der Blei-Säure Batterie-Separator nach Anspruch 1, wobei die leitfähige Kohlenstoffkomponente eine spezifische Oberfläche von mindestens 1.250 $m^2/g$ bis 1.750 $m^2/g$ hat.

5. Der Blei-Säure Batterie-Separator nach Anspruch 1, wobei die leitfähige Kohlenstoffkomponente eine spezifische Oberfläche von mindestens 1750 $m^2/g$ hat.

6. Der Blei-Säure Batterie-Separator nach Anspruch 1, wobei die poröse Membran ein absorbierender Glasmattenseparator ist oder einem absorbierenden Glasmattenseparator benachbart ist.

7. Der Blei-Säure Batterie-Separator nach Anspruch 1, wobei die poröse Membran ferner einen partikelartigen Füllstoff aufweist.

8. Der Blei-Säure Batterie-Separator nach Anspruch 7, wobei der partikelartige Füllstoff ausgewählt ist aus der Gruppe bestehend aus: trockenem, fein verteiltem Siliziumdioxid, ausgefallenem Siliziumdioxid, amorphem Siliziumdioxid, Aluminiumoxid, Talkum und Kombinationen davon.

9. Der Blei-Säure Batterie-Separator nach Anspruch 1, der ferner ein leistungssteigerndes Additiv aufweist, das aus der folgenden Gruppe ausgewählt ist bestehend aus: einem oberflächenaktiven Stoff, Benetzungsmitteln, Farbstoffen, antistatischen Additiven, UV-Schutz-Additiven, Antioxidantien und Kombinationen davon.

**10.** Eine Blei-Säure Batterie, die Folgendes aufweist:

einen Elektrolyten,
eine positive Elektrode, eine negative Elektrode und ein dazwischen angeordneten Separator, wobei der Separator nach Anspruch 1 ist.

**11.** Ein Fahrzeug, das Folgendes aufweist: die Blei-Säure Batterie nach Anspruch 10.

**12.** Ein Blei-Säure Batterie-Separator, der Folgendes aufweist:

eine poröse Membran, die ein oder mehrere Polymere aufweist, die aus der folgenden Gruppe ausgewählt sind bestehend aus: Polyolefin, Polyethen, Polypropylen, Gummi, Polyvinylchlorid, Phenolharzen, Zellulose, synthetischer Holzpulpe, Glasfasern, synthetischen Fasern, natürlichen Gummis, synthetischen Gummis, Latex, Bisphenol-Formaldehyd und Kombinationen davon, und die eine oder mehrere leitfähige Kohlenstoffkomponenten aufweist, die aus der folgenden Gruppe ausgewählt sind bestehend aus: Graphit, künstlichem Graphit, Aktivkohle, Kohlepapier, Acetylenruß, Kohlenstoffruß, Kohlenstoffruß mit großer Oberfläche, Graphen, Graphen mit großer Oberfläche, Keitjenruß, Kohlenstofffasern, Kohlenstofffilamente, Kohlenstoffnanoröhren, offenzelligem Kohlenstoffschaum, einer Kohlenstoffmatte, Kohlenstofffilz, Kohlenstoff-Buckminsterfulleren ("Bucky Balls"), einer wässrigen Kohlenstoffsuspension, Flockengraphit, oxidiertem Kohlenstoff und Kombinationen davon innerhalb und nicht auf dem Separator und die partikelartigen Füllstoff aufweist, der ausgewählt ist aus der Gruppe bestehend aus: trockenem, fein verteiltem Siliziumdioxid, ausgefallenem Siliziumdioxid, amorphem Siliziumdioxid, Aluminiumoxid, Talkum und Kombinationen davon innerhalb und nicht auf dem Separator; und wobei die poröse Membran eines aus der Gruppe aufweist, die aus Folgendem besteht:
feste Rippen, diskrete gebrochene Rippen, kontinuierliche Rippen, diskontinuierliche Rippen, diskontinuierliche Spitzen, diskontinuierliche Vorsprünge, abgewinkelte Rippen, lineare Rippen, Längsrippen, die sich im Wesentlichen in einer Maschinenrichtung der porösen Membran erstrecken, Lateralrippen, die sich im Wesentlichen in einer Quermaschinenrichtung der porösen Membran erstrecken, Transversalrippen, die sich im Wesentlichen in der Quermaschinenrichtung des Separators erstrecken, diskrete Zähne, gezahnte Rippen, Zacken, gezackte Rippen, Zinnen, zinnenartige Rippen, gekrümmte Rippen, sinusförmige Rippen, die in einer kontinuierlichen zick-zack-sägezahnartigen Weise angeordnet sind, die in einer unterbrochenen nicht kontinuierlichen zick-zack-sägezahnartigen Weise angeordnet sind, Rillen, Kanäle, strukturierte Bereiche, Prägungen, Vertiefungen, Säulen, Minisäulen, poröse, nicht-poröse, Minirippen, Kreuzminirippen und Kombinationen davon.

## Revendications

**1.** Séparateur pour batteries au plomb-acide comprenant :

une membrane poreuse comprenant un ou plusieurs polymères choisis dans le groupe constitué par : les polyoléfines, le polyéthylène, le polypropylène, le caoutchouc, le poly(chlorure de vinyle), les résines phénoliques, les fibres cellulosiques, la pâte de bois synthétique, les fibres de verre, les fibres synthétiques, les caoutchoucs naturels, les caoutchoucs synthétiques, le latex, le bisphénol formaldéhyde, et leurs combinaisons, et un ou plusieurs composants de carbone conducteurs choisis dans le groupe constitué par le graphite, le graphite artificiel, le charbon actif, le papier carbone, le noir d'acétylène, le noir de carbone, le noir de carbone à surface spécifique élevée, le graphène, le graphène à surface spécifique élevée, le keitjen noir, les fibres de carbone, les filaments de carbone, les nanotubes de carbone, la mousse de carbone à alvéoles ouvertes, un tapis de carbone, un feutre de carbone, le carbone buckminsterfullerène ("Bucky Balls"), une suspension aqueuse de carbone, le graphite lamellaire, le carbone oxydé, et leurs combinaisons, à l'intérieur et non sur le séparateur, et du sulfate de baryum à l'intérieur et non sur le séparateur ; et
dans lequel ladite membrane poreuse comprend l'un parmi le groupe constitué par :
des nervures pleines, des nervures brisées discrètes, des nervures continues, des nervures discontinues, des pics discontinus, des saillies discontinues, des nervures angulaires, des nervures linéaires, des nervures longitudinales s'étendant sensiblement dans le sens de la machine de ladite membrane poreuse, des nervures latérales s'étendant sensiblement dans le sens travers de ladite membrane poreuse, des nervures transversales s'étendant sensiblement dans ledit sens travers du séparateur, des dents discrètes, des nervures dentées, des cannelures, des nervures dentelées, des créneaux, des nervures crénelées, des nervures courbes, des nervures sinusoïdales, disposées en zigzag continu et en dents de scie, disposées de manière discontinue en zigzag et en dents de scie, des rainures, des canaux, des zones texturées, des gaufrages, des fossettes, des colonnes,

des mini-colonnes, mini-nervures poreuses, non poreuses, des mini-nervures croisées, et leurs combinaisons.

**2.** Séparateur pour batteries au plomb-acide selon la revendication 1, dans lequel ledit polyéthylène est un polyéthylène à très haut poids moléculaire.

**3.** Séparateur pour batteries au plomb-acide selon la revendication 1, dans lequel ladite membrane poreuse a une porosité d'au moins 50%.

**4.** Séparateur pour batteries au plomb-acide selon la revendication 1, dans lequel ledit composant de carbone conducteur possède une surface spécifique d'au moins 1250 $m^2/g$ à 1750 $m^2/g$.

**5.** Séparateur pour batteries au plomb-acide selon la revendication 1, dans lequel ledit composant de carbone conducteur possède une surface spécifique d'au moins 1750 $m^2/g$.

**6.** Séparateur pour batteries au plomb-acide selon la revendication 1, dans lequel ladite membrane poreuse est un séparateur à tapis de verre absorbant ou est adjacente à celui-ci.

**7.** Séparateur pour batteries au plomb-acide selon la revendication 1, dans lequel ladite membrane poreuse comprend en outre une charge sous forme de particules.

**8.** Séparateur pour batteries au plomb-acide selon la revendication 7, dans lequel ladite charge sous forme de particules est choisie dans le groupe constitué par : la silice sèche finement divisée, la silice précipitée, la silice amorphe, l'alumine, le talc, et leurs combinaisons.

**9.** Séparateur pour batteries au plomb-acide selon la revendication 1, comprenant en outre un additif améliorant les performances, choisi dans le groupe constitué par : un tensioactif, des agents mouillants, des colorants, des additifs antistatiques, des additifs de protection contre les UV, des antioxydants, et leurs combinaisons.

**10.** Batterie au plomb-acide comprenant :

un électrolyte,
une électrode positive, une électrode négative, et un séparateur disposé entre les deux, ledit séparateur étant selon la revendication 1.

**11.** Véhicule comprenant la batterie au plomb-acide selon la revendication 10.

**12.** Séparateur pour batteries au plomb-acide comprenant :

une membrane poreuse comprenant un ou plusieurs polymères choisis dans le groupe constitué par : les polyoléfines, le polyéthylène, le polypropylène, le caoutchouc, le poly(chlorure de vinyle), les résines phénoliques, les fibres cellulosiques, la pâte de bois synthétique, les fibres de verre, les fibres synthétiques, les caoutchoucs naturels, les caoutchoucs synthétiques, le latex, le bisphénol formaldéhyde, et leurs combinaisons, et un ou plusieurs composants de carbone conducteurs choisis dans le groupe constitué par le graphite, le graphite artificiel, le charbon actif, le papier carbone, le noir d'acétylène, le noir de carbone, le noir de carbone à surface spécifique élevée, le graphène, le graphène à surface spécifique élevée, le keitjen noir, les fibres de carbone, les filaments de carbone, les nanotubes de carbone, la mousse de carbone à alvéoles ouvertes, un tapis de carbone, un feutre de carbone, le carbone buckminsterfullerène ("Bucky Balls"), une suspension aqueuse de carbone, le graphite lamellaire, le carbone oxydé, et leurs combinaisons, à l'intérieur et non sur le séparateur, et une charge sous forme de particules choisie dans le groupe constitué par : la silice sèche finement divisée, la silice précipitée, la silice amorphe, l'alumine, le talc, et leurs combinaisons, à l'intérieur et non sur le séparateur ; et
dans lequel ladite membrane poreuse comprend l'un parmi le groupe constitué par :
des nervures pleines, des nervures brisées discrètes, des nervures continues, des nervures discontinues, des pics discontinus, des saillies discontinues, des nervures angulaires, des nervures linéaires, des nervures longitudinales s'étendant sensiblement dans le sens de la machine de ladite membrane poreuse, des nervures latérales s'étendant sensiblement dans le sens travers de ladite membrane poreuse, des nervures transversales s'étendant sensiblement dans ledit sens travers du séparateur, des dents discrètes, des nervures dentées, des cannelures, des nervures dentelées, des créneaux, des nervures crénelées, des nervures courbes, des nervures

sinusoïdales, disposées en zigzag continu et en dents de scie, disposées de manière discontinue en zigzag et en dents de scie, des rainures, des canaux, des zones texturées, des gaufrages, des fossettes, des colonnes, des mini-colonnes, des mini-nervures poreuses, non poreuses, des mini-nervures croisées, et leurs combinaisons.

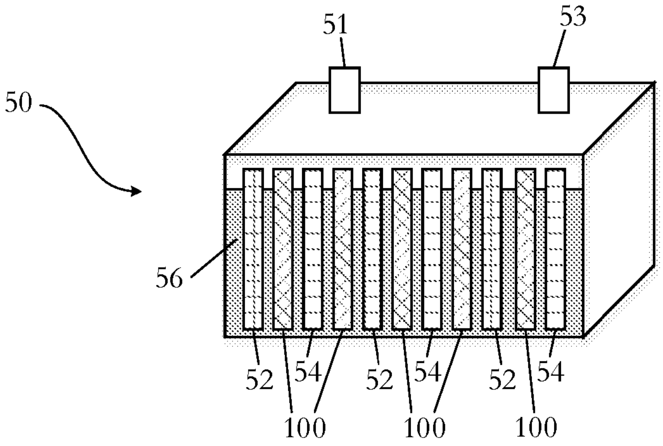


FIG. 1A

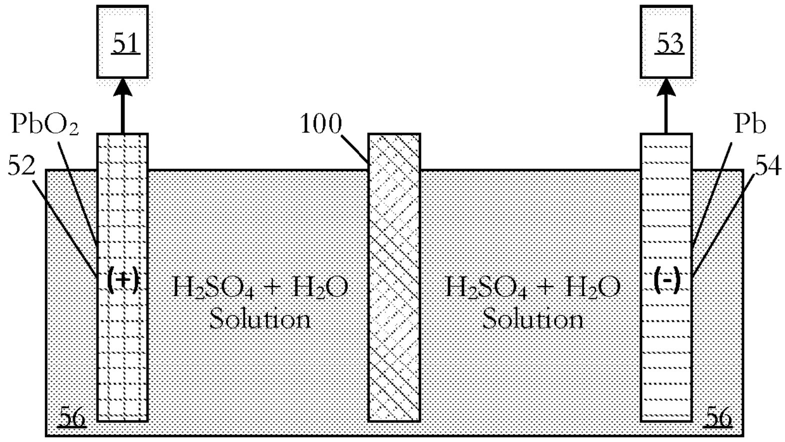


FIG. 1B

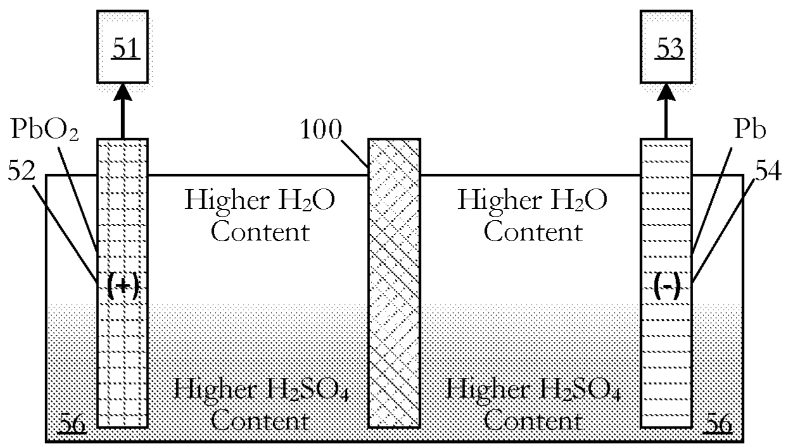


FIG. 1C

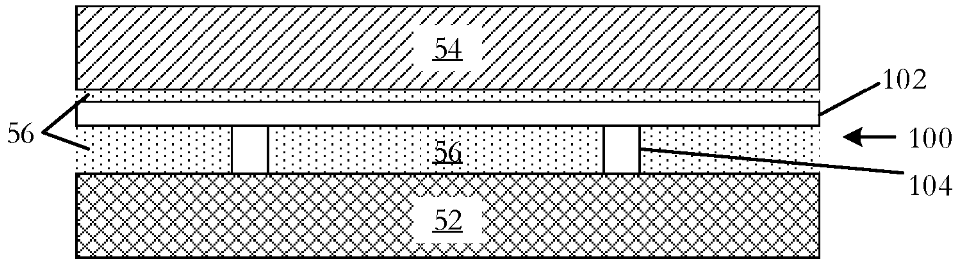


FIG. 2A

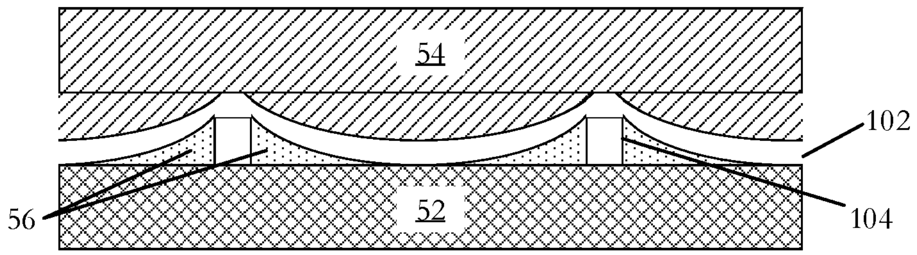


FIG. 2B

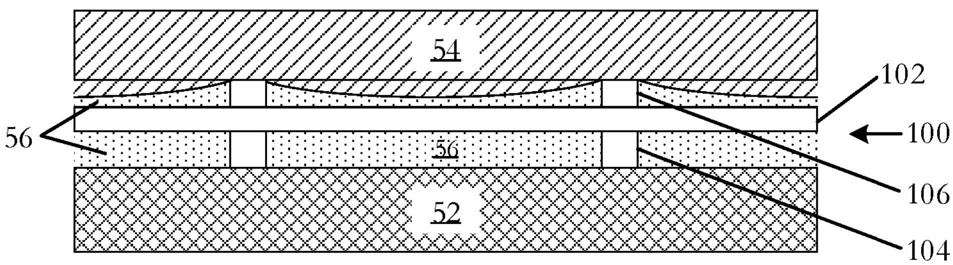


FIG. 2C

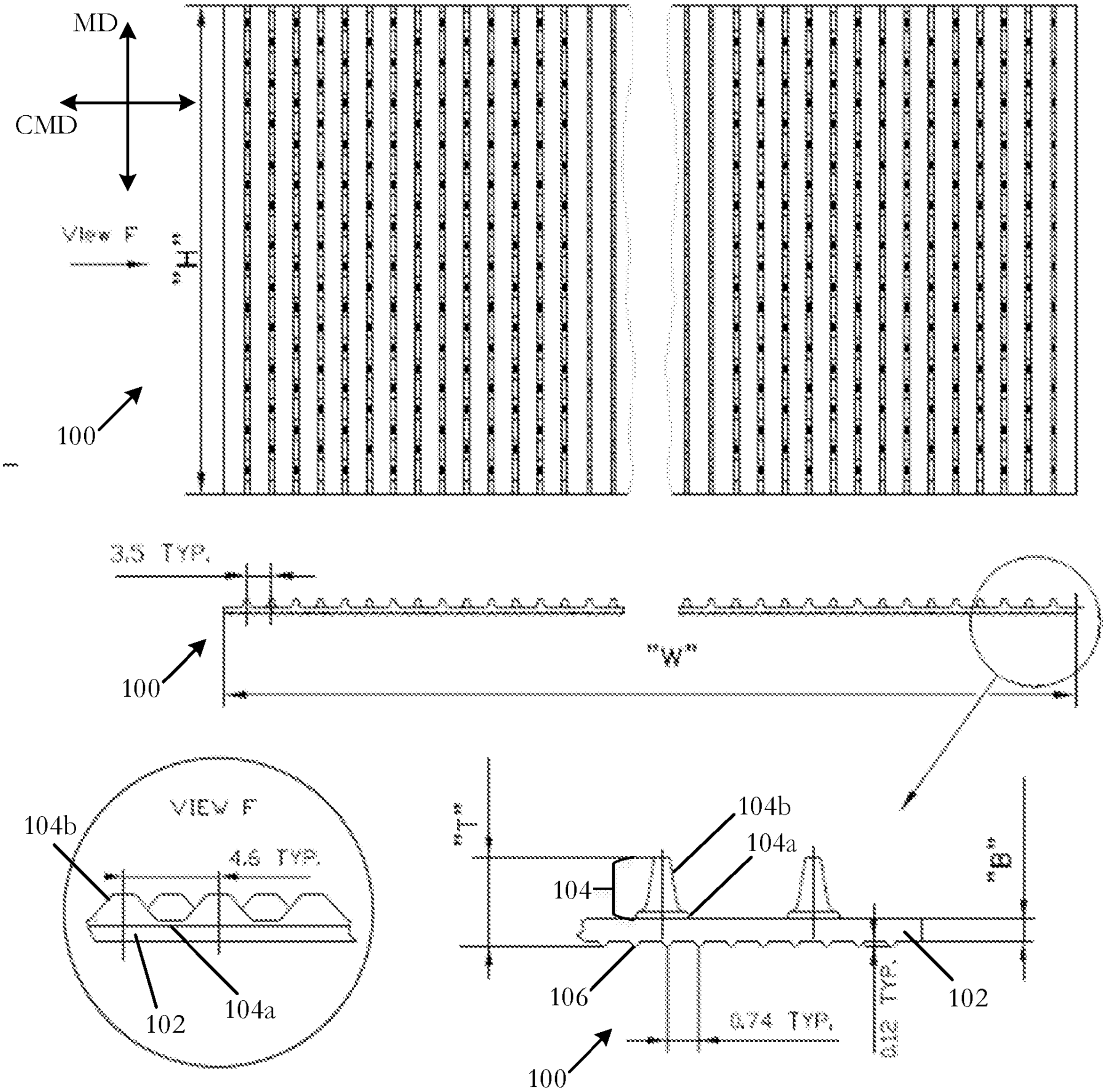
MD
CMD
View F
"H"
100
3.5 TYP.
100
"W"
VIEW F
104b
4.6 TYP.
102
104a
"T"
104b
104a
104
"B"
106
102
0.74 TYP.
0.12 TYP.
100

FIG. 2D

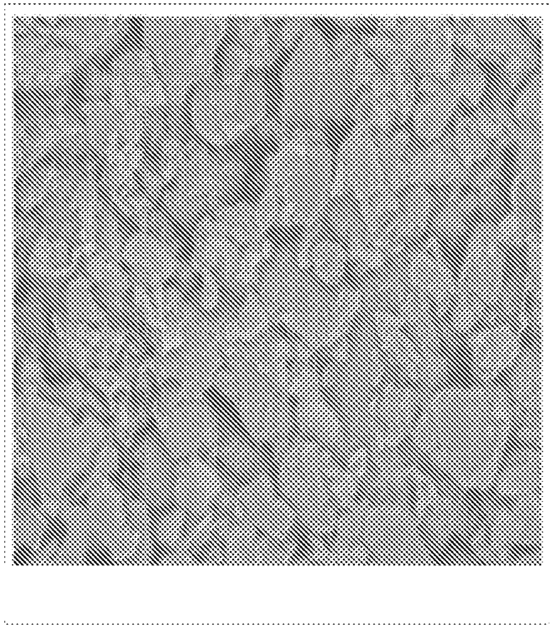

Graphite:100
SBL: 1.5g
CMC: 1.1g
Thickness: 48μm

FIG. 3A

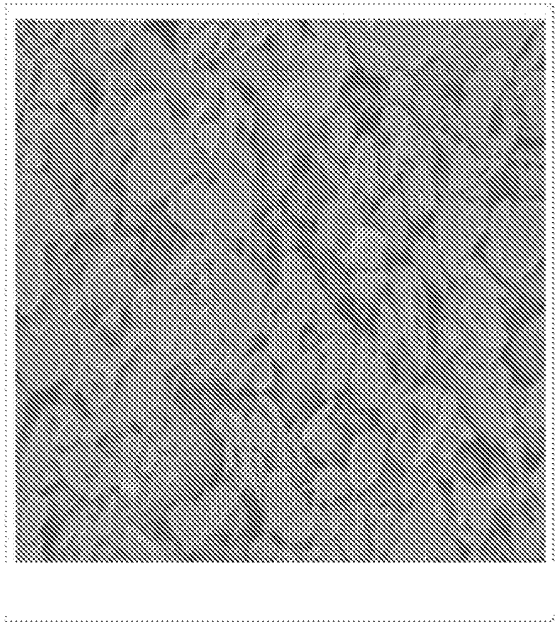

Graphite:100
SBL: 6.0g
CMC: 1.1g
Thickness: 38μm

FIG. 3B

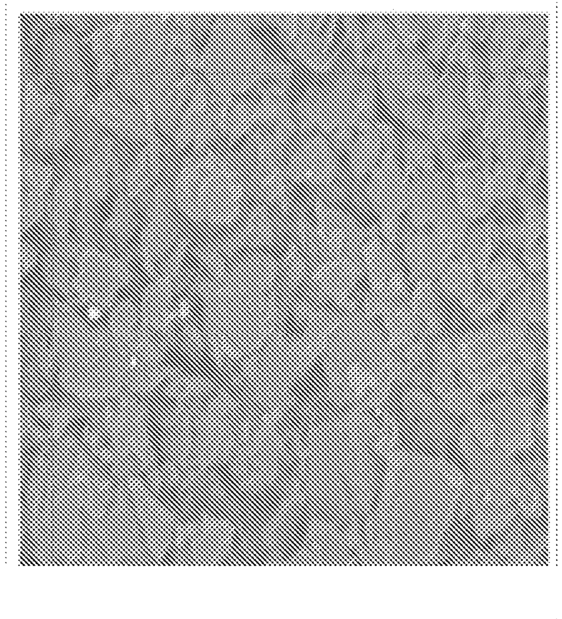

Graphite:100
SBL: 13.5g
CMC: 1.1g
Thickness: 40μm

FIG. 3C

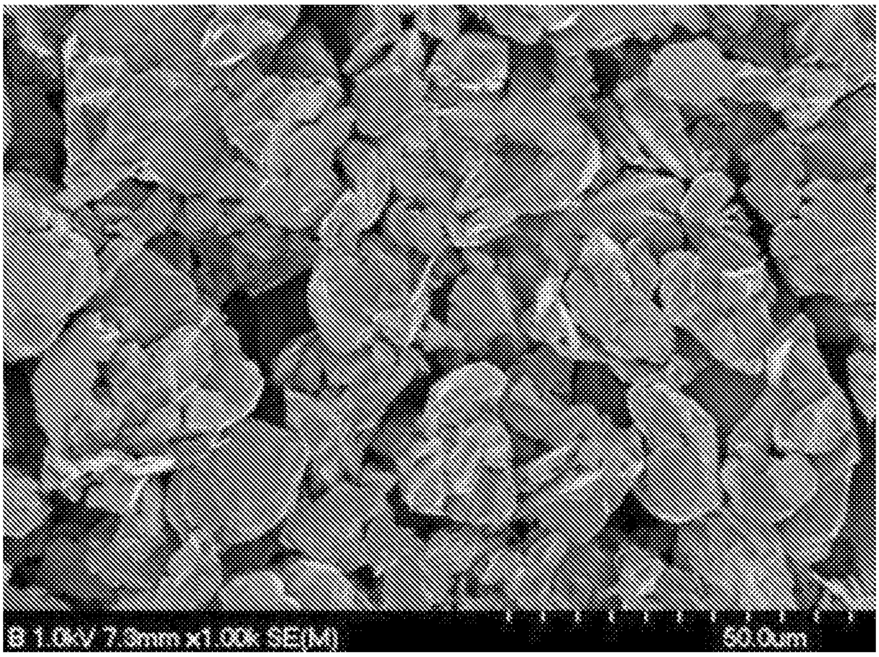


FIG. 3D

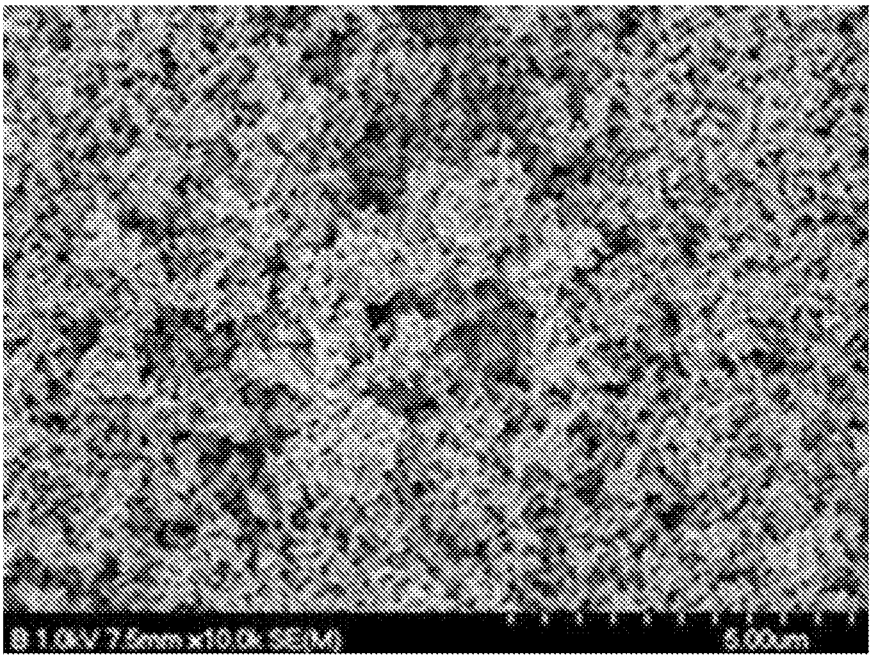

FIG. 3E

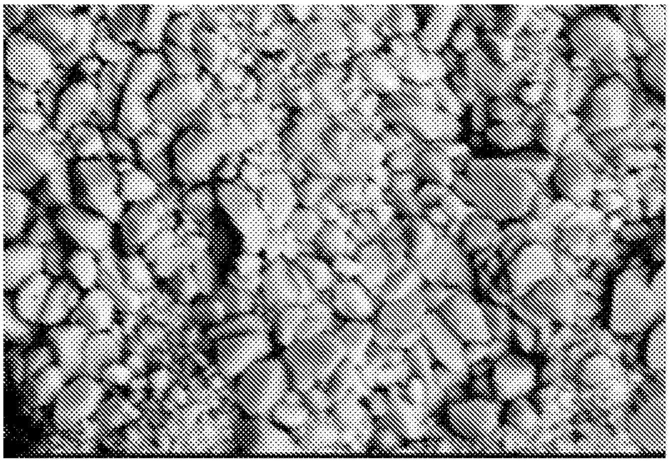

FIG. 4A

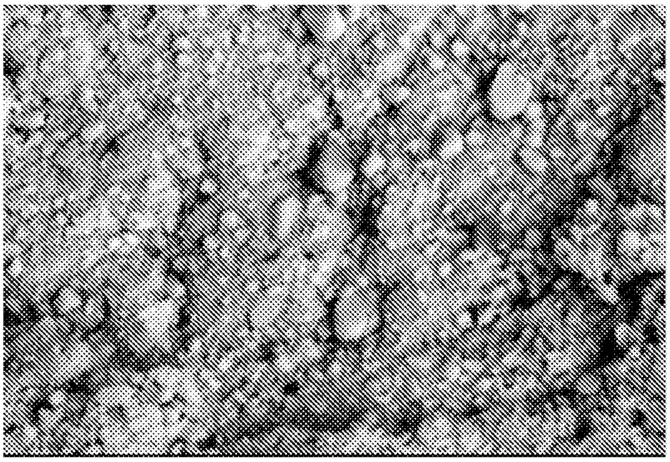

FIG. 4B

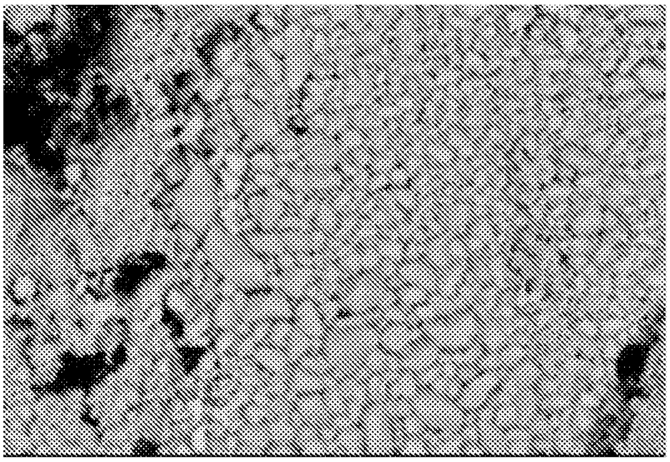

FIG. 4C

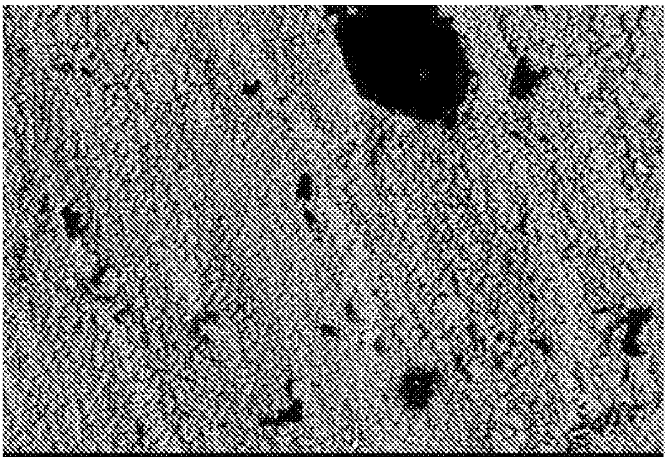

FIG. 5A

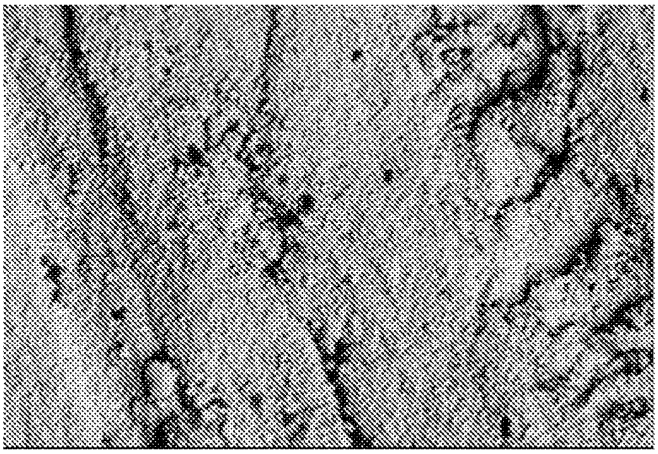

FIG. 5B

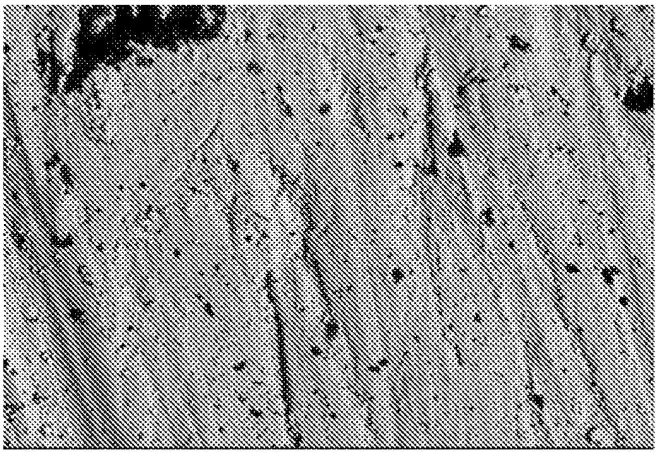

FIG. 5C

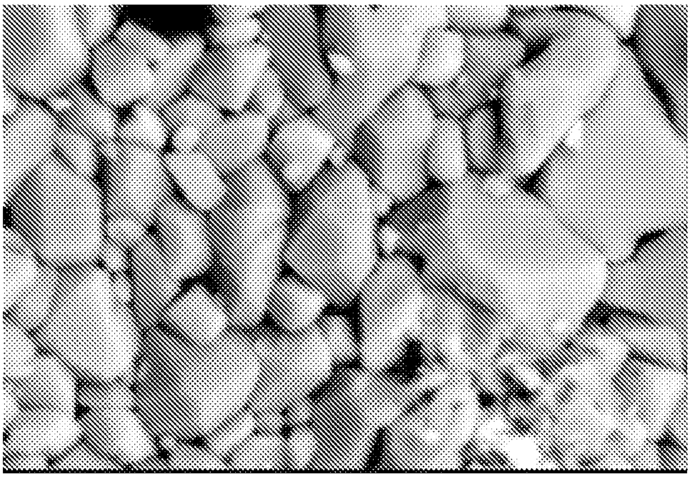

FIG. 6A

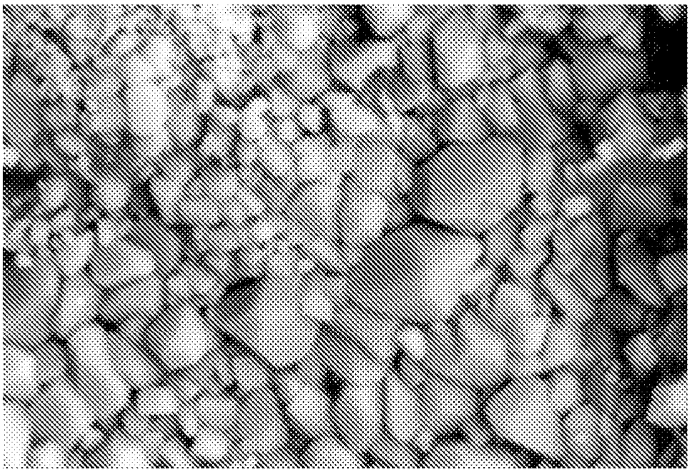

FIG. 6B

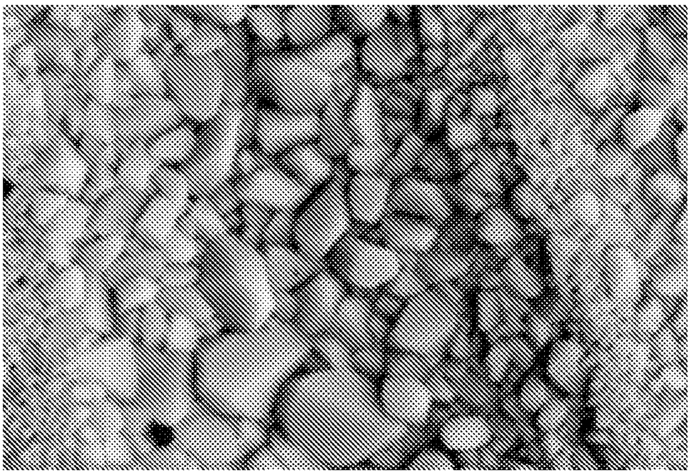

FIG. 6C

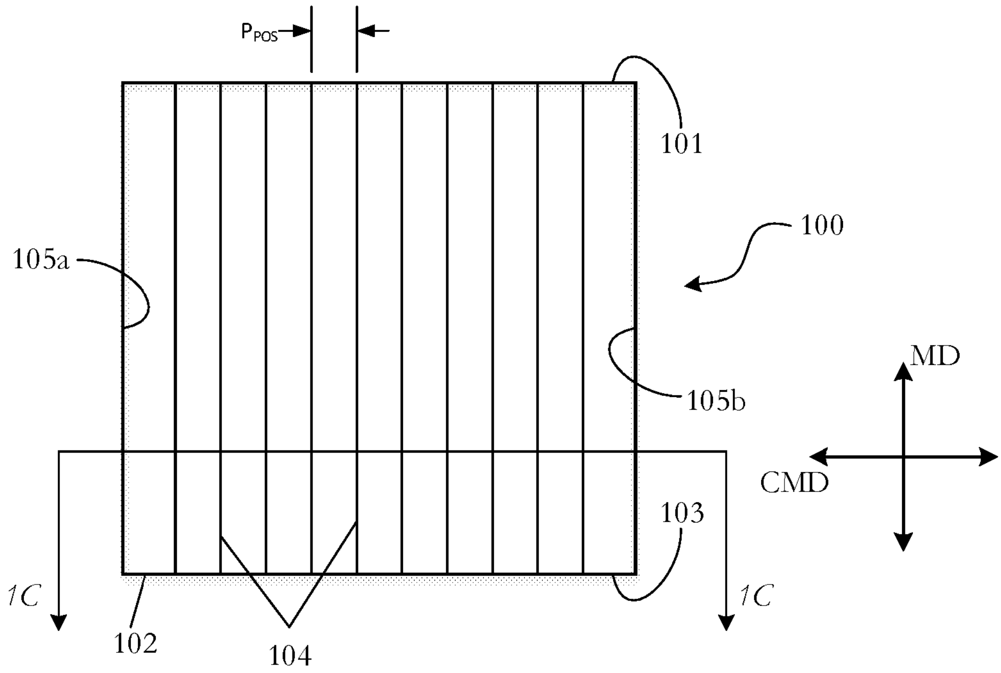
$P_{POS}$
101
100
105a
105b
MD
CMD
103
1C
1C
102
104

FIG. 7A

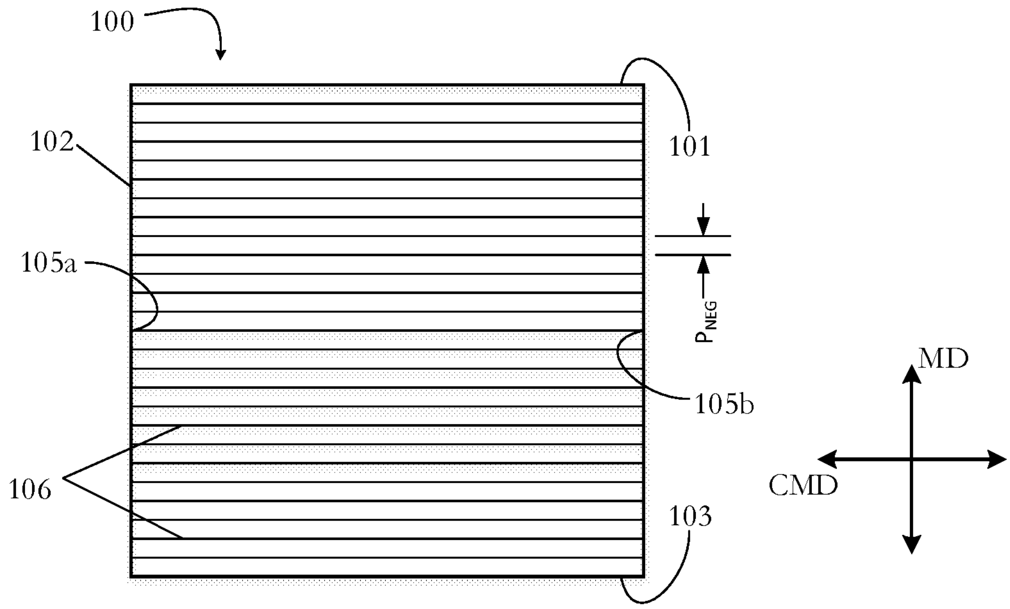
100
102
101
105a
$P_{NEG}$
105b
MD
106
CMD
103

FIG. 7B

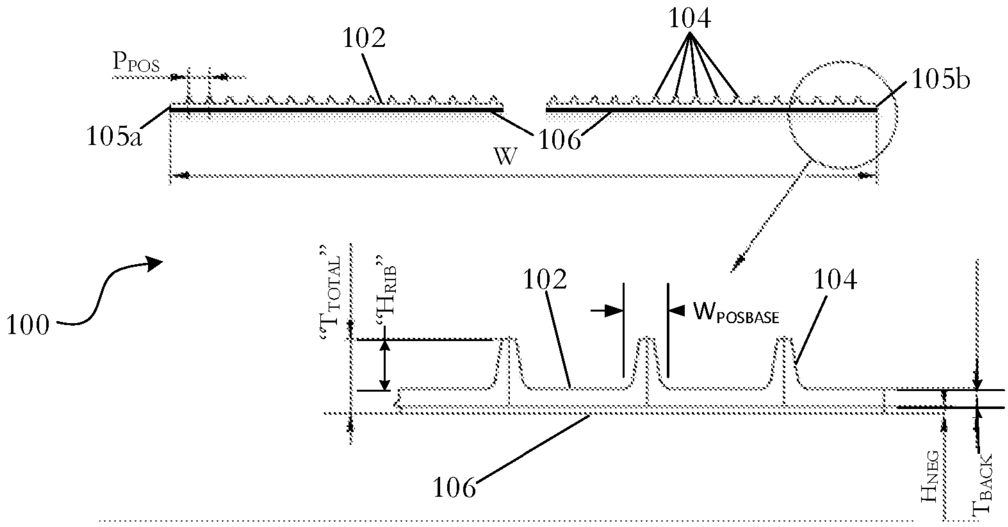
104
102
$P_{POS}$
105b
105a
106
W
106
100
"$T_{TOTAL}$"
"$H_{RIB}$"
102
$W_{POSBASE}$
104
106
$H_{NEG}$
$T_{BACK}$

FIG. 7C

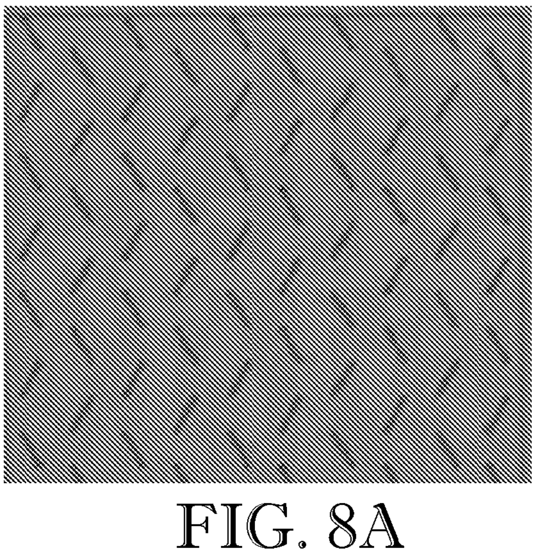

FIG. 8A

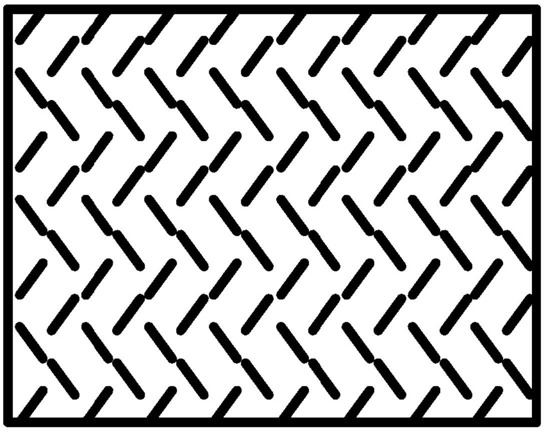

FIG. 8B

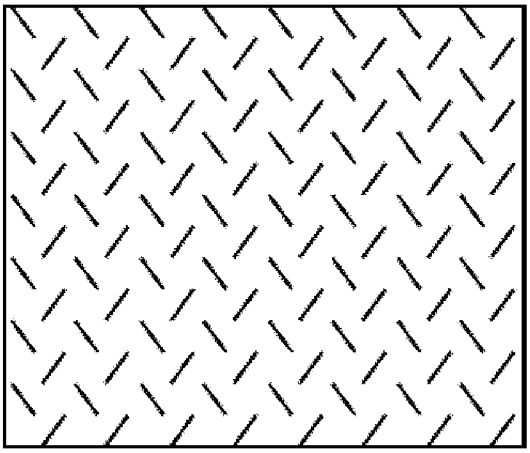

FIG. 8C

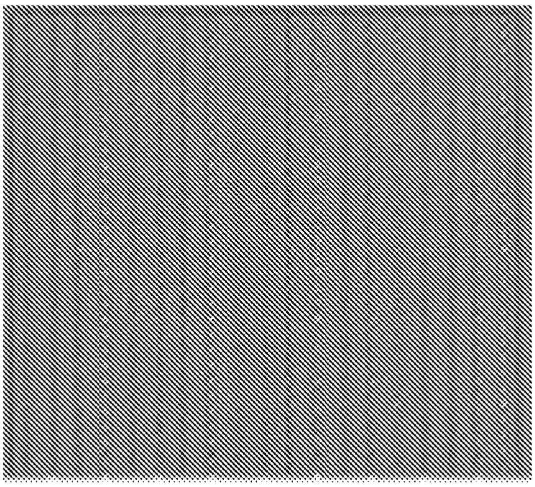

FIG. 8D

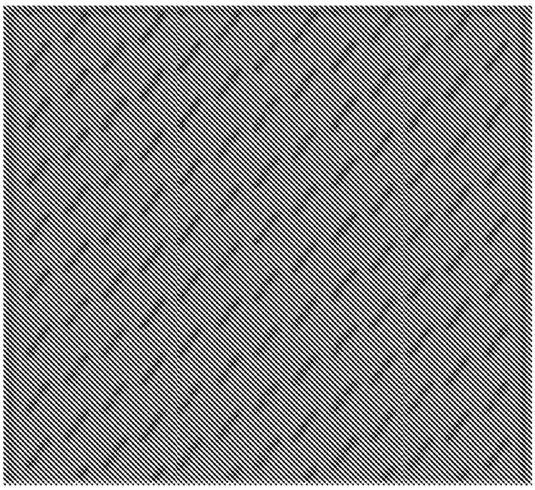

FIG. 8E

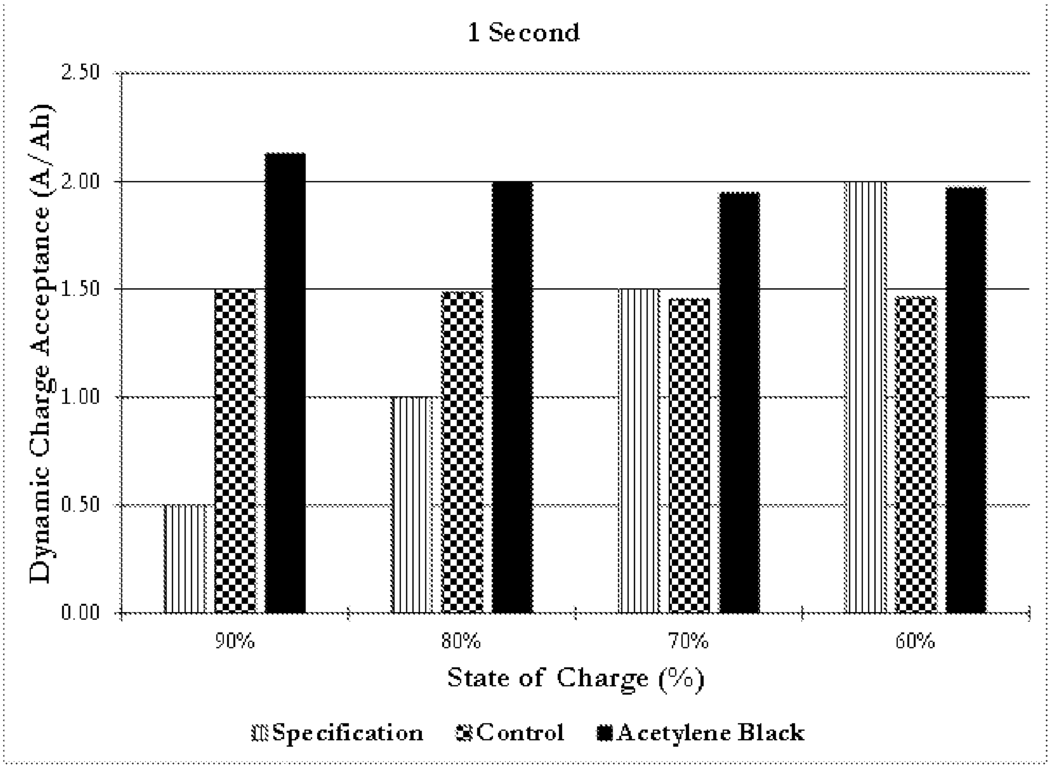
1 Second
Dynamic Charge Acceptance (A/Ah)
2.50
2.00
1.50
1.00
0.50
0.00
90%
80%
70%
60%
State of Charge (%)
Specification
Control
Acetylene Black

FIG. 9A

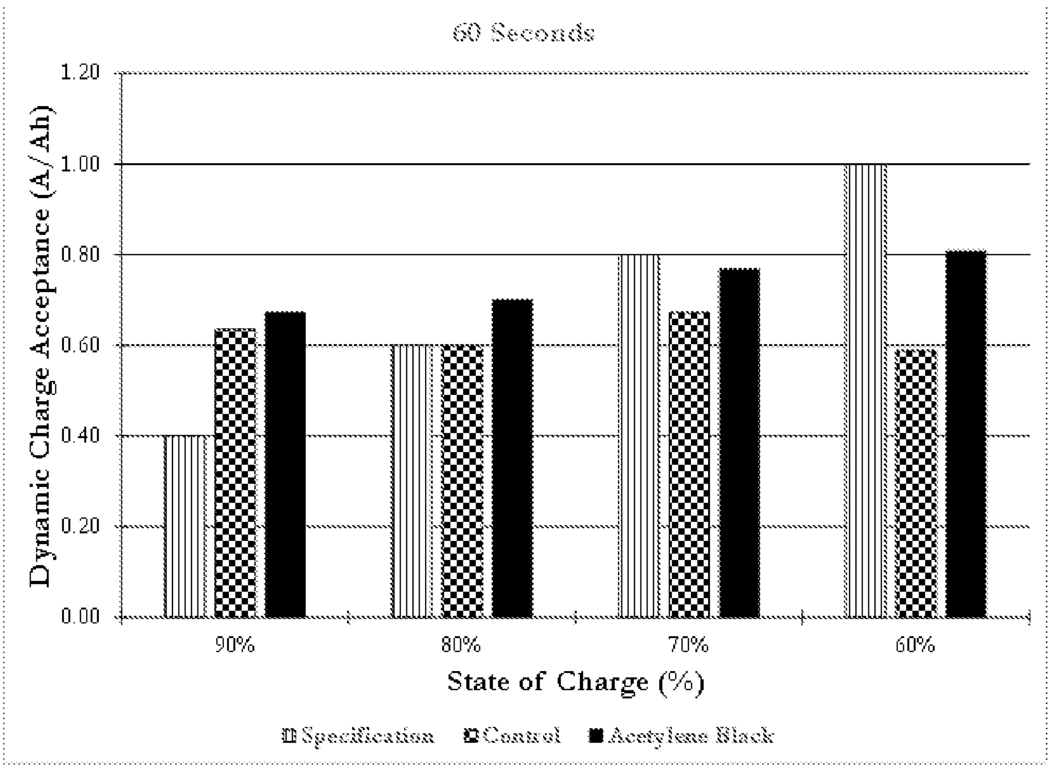
60 Seconds
Dynamic Charge Acceptance (A/Ah)
1.20
1.00
0.80
0.60
0.40
0.20
0.00
90%
80%
70%
60%
State of Charge (%)
Specification
Control
Acetylene Black

FIG. 9B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20170104199 A
- WO 2017062781 A
- US 2017098810 A
- US 201207074 B
- EP 2858142 A
- US 9564623 B
- US 9876209 B


### Non-patent literature cited in the description


- Handbook of Battery Materials. Wiley-VCH Verlag GmbH, 1999, 245-292